(19) Europäisches Patentamt / European Patent Office / Office européen des brevets

(11) **EP 4 187 230 A1**

(12) **EUROPEAN PATENT APPLICATION**

(43) Date of publication:
**31.05.2023 Bulletin 2023/22**

(21) Application number: **21210842.7**

(22) Date of filing: **26.11.2021**

(51) International Patent Classification (IPC):
**G01N 21/03** *(2006.01)*     **G01N 21/64** *(2006.01)*
**G01N 21/77** *(2006.01)*

(52) Cooperative Patent Classification (CPC):
**G01N 21/77; G01N 21/645;** G01N 2021/0325;
G01N 2021/6434; G01N 2021/6482;
G01N 2021/6484; G01N 2021/7786

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ICHORtec GmbH**
**52353 Düren (DE)**

(72) Inventors:
• **Fedorych, Oleh**
  **520620 Aachen (DE)**
• **Driftmeyer, Michael**
  **58706 Menden (DE)**
• **Korth, Uwe**
  **52353 Düren (DE)**

(74) Representative: **Fuchs Patentanwälte
Partnerschaft mbB
Tower 185
Friedrich-Ebert-Anlage 35-37
60327 Frankfurt am Main (DE)**

(54) **SENSOR VESSEL FOR THE OPTICAL DETECTION OF BIOMARKERS**

(57)     The present invention pertains to a sensor vessel for the optical detection of biomarkers, preferably nucleic acids and/or proteins. The sensor vessel can be used for example to optically detect a biomarker, for example a marker for a disease, a virus, a MRSA, a parasite, and the like, with high accuracy in an environment or subject.

Figure 1

## Description

The present invention pertains to a sensor vessel for the optical detection of biomarkers, preferably nucleic acids and/or proteins. The sensor vessel can be used for example to optically detect a disease, a virus, a MRSA, a parasite, and the like, with high accuracy in an environment or subject.

## Background of the invention

The detection of biomarkers is an evolving field in the pharmacological industry. An increasing number of biomarkers is identified, which allow the prediction and/or treatment of a large number of diseases. This plays an important role, both for the choice of therapy, as well as for the prediction of the course of the disease.

In conjunction with the identification of new biomarkers, also the idea of "personalized medicine" evolved. That is the individualized treatment of patients based on their individual health status in contrast to the "one fits all" treatment of the past.

Furthermore, "personalized medicine" could open the door for "auto-diagnosis", i.e. by the patients themselves at home supported by suitable devices. Already today "wearables" such as smart-watches, fitness-trackers and the like measure body-parameters, such as blood pressure, heartbeat, oxygenation, etc. and this data may be used for an initial diagnosis.

Biomarkers, however, would allow a much more detailed view on diseases and preconditions, and, if they could be measured in an automated device at home, could greatly improve the early recognition of diseases.

However, up to now, personalized medicine based on the individual status of certain biomarkers is, beside few exceptions, still time consuming, cost intensive and needs the supervision of trained laboratory personnel.

Thus, a great need exists to simplify the tests system with which certain biomarkers can be detected qualitatively and quantitatively.

In recent years novel optical analyzing devices have been developed, which aim to solve this need.

DE 10 2019 132 525.0 describes for example an optical analyzing device for the detection of the concentration of an analyte within a sample. The application describes a sampling unit which comprises a sensor-element in order to detect an analyte within a sample. The sensor-element is excited with a LASER beam and the luminescence of the complex between sensor-element and analyte is measured and analyzed within the optical device.

However, especially for automated use, an improved vessel for the detection reaction, called "sensor vessel" in this application, is needed, which combines the necessary features of safe and easy biological sample collection and storage, facilitation of the necessary biological reactions and providing the necessary optical characteristics, so that the sensor vessel can be used with an optical analyzing device in order to measure the concentration of biomarkers within the biological sample.

Such a sensor vessel is provided by the present invention.

## Detailed description of the invention

In a first aspect the present invention pertains to a sensor vessel (1), characterized in comprising of at least a reaction chamber (4), a ferrule (8) comprising of a light conducting element, such as optical fiber (glass or plastic) with core (15, 11) and a sheath (10) encapsulating the light conducting element (11), and a transparent carrier-element (6) comprising a sensor-probe.

The sensor vessel (1) combines several technical solutions:

- Safe collection and storage of biological sample (in at least one embodiment being pathogenic);

- Facilitation of a lysis of the biological sample and facilitation of the binding of target molecules within the liquid sample to the sensor-probe (for example with a flourochrome) within the carrier-element;

- Facilitation a light conduction from the optical analyzing device to the carrier-element (and the sensor-probe (for example aptamer with a flourochrome) within) and reverse, thereby producing as little as possible "light pollution" in form of reflection, absorption and scattering.

In one embodiment, the sensor vessel (1) is a "single use" or "disposable" device, which poses specific requirements regarding cost-effective production without jeopardizing the optical quality of each device.

Thus, some important embodiments of the invention are:

- The material of the sensor vessel (1) must be chemically inactive and optically inactive in order to avoid any "light contamination". Preferably the material fulfils medical standards. In some embodiments a polymer, for example polyethylene (PE) or polypropylene (PP) may be used, further examples of appropriate polymers are explained below.

- The material of the ferrule (8) must be optically inactive (i.e. no generation of "light-contamination") at least in the range of the excitation and detection wavelengths of between 300 nm - 1100 nm, preferably of between 500 nm - 700 nm.

- The light conducting element, e.g. the optical fiber, must be "optically clear" that is at least 95% or more, preferably 99% or more, most preferably 100% transparent, in the range of the excitation and detection wavelengths of between 300 nm - 1100 nm, preferably of between 500 nm - 700 nm.

- The alignment-deviation of the fiber within the ferrule with fiber delivering optical excitation should be less than 20µm, preferably less than 15 µm, more preferably less than 10 µm, even more preferably less than 5 µm for example for a multimode optical fiber with 200µm core (NA 0.22). For fibers with smaller cores the accuracy requirement is higher with an error deviation of less than 1%, preferably less than 0.5%, even more preferred less than 0.25%.

- Fiber-fiber alignment accuracy is ruled by application of a so-called "mating sleeve" finished with high accuracy with an error deviation of less than 1%, preferably less than 0.5%, even more preferred less than 0.25% from the optical axis.

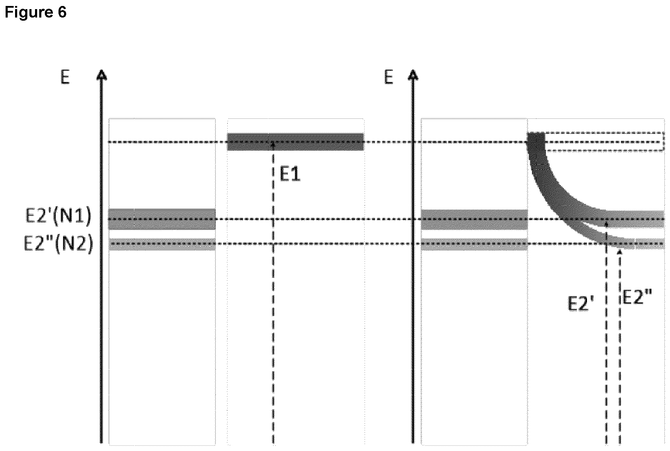

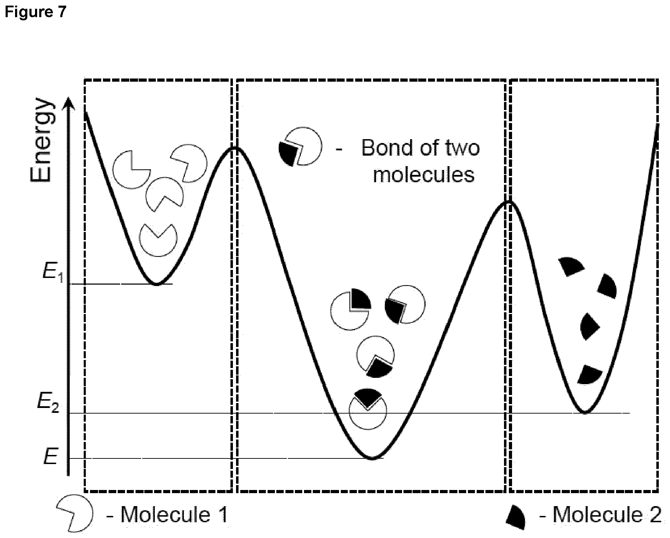

The detection-signal which is generated by the probes in the polymer of the carrier element makes use of the change of light excitation-energy upon binding of two molecules (cf. figures 6 and 7). This effect is about 10 times weaker than FRET and/or other classical fluorescence signals. However, it has been found that by 3-dimensional arrangement of the sensor probes (for example a molecular beacon) in conjunction with the correct geometrical and physical relationship between light-conducting element, light emitting efficiency of the LASER and other features of the sensor vessel, a signal intensity can be achieved which results in significant quantitative and qualitative readouts.

It is one of the findings of the present invention that there is an intricate relationship between the light emitting efficiency of the exciting light (in one embodiment the light emitting efficiency of the LASER) and the concentration of the molecular probe. Without being bound to theory it seems to be that the signal strength is in direct relation to the light emitting efficiency of the LASER and the concentration as well as the distribution of the probe within the carrier element.

Especially the concentration of the probe relates to the development of an intermolecular network which amplifies the signal, and, consequentially increases the sensitivity of the measurement. This is also the reason why the probe is present in the carrier in a 3-dimensional orientation rather than conventional methods which use 2-dimensional setups (e.g. the immobilization of the probe on a surface). For a similar reason the power/light emitting efficiency of the light source is also related to the polymer volume (volume of the carrier element). Further factors, which may influence the signal intensity, and, thus, need to be balanced with each other are: diameter of the light conducting element, fluorescence efficacy and lifetime of the probe, numerical aperture (NA), beam expansion in the carrier, loss of energy at the optical interfaces, etc.

The theoretical background explaining excited state lifetimes, photochemistry, local environmental fluctuations, enzymatic activity, quantum optics, and many other dynamical effects, etc. is explained for example in the review-article: W. E. Moernera and David P. Fromm, "Methods of single-molecule fluorescence spectroscopy and microscopy", Review of Scientific Instruments, volume 74, number 8, August 2003 (https://my.ece.utah.edu/~blair/T/ece7960/papers/moerner03msmf.pdf).

In one embodiment the sensor vessel (1) is made from a polymer selected from polyethylene (PE), polypropylene (PP), polyvinylchloride (PVC), cellulose-acetate (CA), cyclo-olefin-copolymer (COC), polyethylene-furonate (PEF). Since in some embodiments the sensor vessel (1) is a "single use" or "disposable" device, the sensor vessel (1) is then preferably made from a biodegradable and/or compostable polymer, such as polybutylene succinate (PBS), polylactic acid (PLA), polyhydroxyalkanoate (PHA), thermoplasic starch polymer (TPS), polycaprolactone (PCL), polybutylene adipate terephthalate (PBAT) and/or any other biodegradable polymer according to EN 13432.

In a further aspect the sensor vessel (1) according to claim 1, may further comprise an element selected from the list consisting of a lid (2), a sealing ring (3), a buffer-solution (5), an inner sleeve (7) configured to be fitted with the ferrule (8), an outer sleeve (9) configured to be fitted to an optical analyzing device and/or a combination thereof.

In one embodiment the sensor vessel (1) is configured to be used with an optical analyzing device (19), such as described in detail in DE 10 2019 132 525.0. Such a device provides a light source with an excitation wavelength of between 300 nm - 1100 nm, preferably of between 500 nm - 700 nm and is able to detect the energy-shift upon the binding of the sensor-probe to the target molecule (i.e. in the detected light). Both the excitation light as well as the detection light are transported in the light conducting element (11) to and from the carrier element (6). Such a device has a light source for the excitation light, in some embodiments a LASER, and a microprocessor that is arranged for automatically receiving data from the detector, and for concluding that the target is in the sample. The device may further have a beam splitter with high pass optical filter, or a dichroic mirror between the carrier element (6) and the detector which eliminates the excitation light from the signal to be measured by the detector. The analyzing device is configured in such a way that only the emitted light is protruding to the detector.

In one embodiment the reaction chamber (4) of the sensor vessel (1) comprises the buffer-solution (5).

The first role of the buffer-solution is of breaking open cells ("lysis function") for use in the further detection reaction in order to analyze the macromolecules of the cells. The biological sample may be a blood sample, a saliva sample and/or a tissue sample, or any other human body fluid or tissue sample, and therefore the cells therein need to be broken open in order to analyze the biomarkers within. In one embodiment between at least 50% and up to 100% of the cells in a sample are "broken open", in a preferred embodiment between 60% and 99%, in a further preferred embodiment between 70 and 85%.

The second role is to promote the detection reaction itself and not interfere with the detection ("detection function"), for example the buffer must promote hybridization of target molecules with the sensor probes (for example a hybridization and/or binding of the sensor probe with the target molecule) and allow the analysis to take place. For the detection function, it is important, that the buffer solution is "optically clear" at the wavelength, where the biomarker molecules are active, e.g. between 300 nm - 1100 nm, preferably between 500 nm - 700 nm.

Although also two different buffers may be used for "lysis function" and "detection function", it is a preferred embodiment of the present invention to use one buffer, which serves both purposes, since this reduces costs, simplifies the handling and allows higher throughput.

Another role of the buffer-solution is to keep the carrier element moist and to facilitate the binding of the biomarker with the sensor-probe.

For example detergents often used in lysis buffers, such as sodium dodecyl sulfate (SDS) or Triton X-100, may show some fluorescence- and/or luminescence-effects and must not be used in the buffer-solution (5).

According to the present invention, in one embodiment the buffer-solution (5) comprises HEPES-NaOH at a pH of 8.5; NaCl, and/or MCl2.

Suitable buffers according to the present invention may be selected from the following compositions comprising:

- 25 mM Tris, HCl (pH 7.6), 150 mM NaCl, 1% NP-40, 0.1 to 1% sodium-desoxycholate, or

- 50 mM Tris, HCl (pH 8.5), 150 mM NaCl, 0.1 to 1% optic inactive detergent; or

- 200 mM HEPES, 400 mM NaCl, 80 mM $MgCl_2$, pH 8.5.

In one embodiment the reaction chamber (4) may be closed by a cover or lid (2). In other embodiments the reaction chamber (4) may be closed by a cover such as sealant foil or the like. This is in order to avoid contamination of the reaction chamber during transportation and set-up; and in order to avoid spill-over of the biological sample. This can be especially important in cases of potential pathogenic biological samples. Furthermore, oxygen and light needs to be kept outside the reaction chamber during measurement as well as during storage. In some embodiments a seal, such as for example a sealing ring (3), may be fitted to the reaction chamber (4) and/or the cover or lid (2) in order to tighten the reaction chamber further.

In a further aspect the invention pertains to a ferrule (8) consisting of a light conducting element (11).

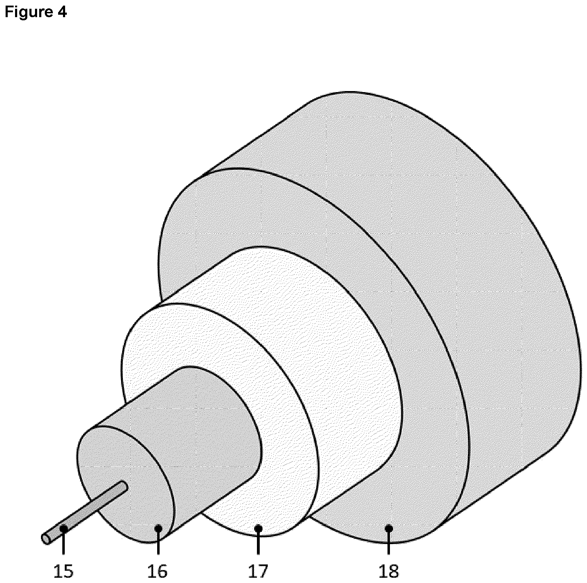

The light conduction element (11) is depicted in figure 4 as "core (15)", which may be surrounded by a cladding (figure 4, (16)), a coating and/or buffer (figure 4, (17)); and a jacket (figure 4, (18)).

At least one of the elements (16), (17) and (18), preferably at least two of the elements (16), (17) and (18), in certain aspects of the invention all three of the elements (16), (17) and (18) may be present in the ferrule (8). For example, in some embodiments only the cladding (16) and the jacket (18) may be present, in some embodiments only the cladding (16) may be present, in some embodiments the cladding (16) and the coating (17) may be present, in some embodiments the coating (17) may also serve as a cladding. Thus, for simplification, the elements (16), (17) and (18) are collectively depicted as "sheath (10)" in the text and the figures.

The light conducting element (11) (i.e. the core (15) in figure 4) may be some kind of optical fiber, such as an optical glass fiber, polymeric optical fiber, plastic optical fiber and/or a combination thereof. It can be important that the light conducting element (11) has a higher refractive index than the sheath (10), especially than the cladding (16).

The core (15) of the light conducting element (11) usually has a diameter of between 5 to 500 $\mu$m, preferably about 50 to 200 $\mu$m, more preferably about 100 $\mu$m, in one embodiment about 200 $\mu$m and a cladding (16) of a thickness of between 5 to 50 $\mu$m, in one embodiment about 5 $\mu$m.

The higher refractive index of the light conducting element (11), i.e. the core (15), is achieved by doping with germanium or phosphorus, which also results in small amounts of germanium dioxide ($GeO_2$) or phosphorus pentoxide ($P_2O_5$) in the amorphous silicon dioxide structure of the quartz glass. However, it is also possible to manufacture the core from pure $SiO_2$ and to dope the cladding with boron or fluorine, which leads to a reduction in the refractive index. (Pure $SiO_2$ cores are better suited for the transmission of wavelengths in the blue and ultraviolet spectral range.)

The core of polymer optical fibers (POF) mostly consists of polymethyl methacrylate (PMMA) and less often of polycarbonate (PC). The cladding of these fibers is lightly doped with fluorine in order to obtain a lower refractive index. Coating can be dispensed with POF, as the material used is less sensitive to mechanical stress than quartz glass. There are also fibers with a quartz glass core and a sheath made of fluorine-doped plastic, which are referred to as hard-clad silica fibers (HCS) or polymer-clad silica fibers (PCS). To improve the mechanical and thermal properties, they can also be provided with a coating (sometimes made of ethylene-tetrafluoroethylene - ETFE).

In one embodiment the optical fiber is made by extrusion and/or by a fiber-drawing method, cladded and then cut into suitable lengths, e.g. by thermic cutting.

The cladding (16) of the ferrule (8) is made out of cladding material, which has a lower index of refraction as the transparent core material. Light is kept in the core by the phenomenon of total internal reflection which causes the fiber to act as a waveguide. The cladding material may be transparent and/or made from a quartz glass ($SiO_2$), a polymer and/or a ceramic and/or metal. In one embodiment the light conducting element may be produced in a molding process, for example clamped into a molding tool and molded with thermostet ("duroplast") or another thermoplastic material.

The ferrule may comprise additional layers on top of the cladding, for example protective coatings and/or buffers (17) or jackets (18), which serve as protection against chemical or physical impacts. The jacket coating usually comprises of a coating made of special plastic (such as polyimide, acrylic or silicone), which also protects the fiber from moisture. Without the coating, micro-cracks present on the fiber surface may lead to a considerable reduction in the mechanical load-bearing capacity.

In one embodiment the light conductor element is glued to the cladding. In this case an "optically clear" adhesive is used, i.e. an adhesive which must be "optically clear" in the wavelength range of 300 nm - 1100 nm, preferably of between 500 nm - 700 nm, has a spectral transmission ≥ 99% and shows no absorption and no fluorescence, such as for example high temperature epoxy EPO-TEK® 301-2 or similar epoxies/glues.

In one embodiment the ends of the ferrule (8) (or at least the ends of the light conducting element (11)) are high gloss polished to lower reflection effects, the final surface roughness should have an arithmetic mean roughness (Ra, material removal not permitted) of 1.6 $\mu$m, preferably 0.8 $\mu$m, preferably 0.6 $\mu$m, more preferably of 0.5 $\mu$m, even more preferably of 0.4 $\mu$m, most preferably of 0.2 or better (according to DIN EN ISO 4288:2010). In one embodiment Ra is at least better as the wavelength of excitation and emission. In yet another embodiment the median peak-to-valley height (Rz, according to DIN EN ISO 4288:2010) is less than 10 $\mu$m, preferably less than 5 $\mu$m, more preferably less than 2 $\mu$m, even more preferably less than 1$\mu$m, even more preferably less than 0.8 $\mu$m and up to 0.4 $\mu$m. This is important to reduce any losses at the interface between the light conducting element and the optical analyzing device on one end, and the carrier element (6) on the other end. Furthermore, in one embodiment, the light conducting element (11) is arranged in the center of the transparent sensor-element (6) and perpendicular to the surface of the transparent carrier-element (6) with an error deviation of less than 3°, preferably of less than 2°, preferably of less than 1°, preferably 0.5°, most preferably of less than 0.25°.

In one embodiment the ratio between the diameter of the core (15) of the light-conducting element (11) and the diameter of the carrier element (6) is at least 1:1, preferably 1:1.1, more preferably 1:1.5, preferably 1:2 or preferably 1:2:5. In one embodiment the diameter of the core of the light conducting element is between about 100 and about 300 $\mu$m, for example 125 $\mu$m, 150 $\mu$m, 200 $\mu$m, 230 $\mu$m, 250 $\mu$m, 270 $\mu$m. In one embodiment the diameter is 120 $\mu$m. Consequentially, the diameter of the carrier element (6) is between about 130 and 30 $\mu$m, for example in case of a 125 $\mu$m core about 130 - 310 $\mu$m.

The concentration of the sensor probe (e.g. the molecular probe, MB; depicted as "$n_{MB}$") depends on the size of the probe, the lifetime and signal intensity of the fluorochrome and the properties of the exciting light (e.g. wavelength and signal intensity of the LASER and loss of energy in the optical pathway). In some embodiments the concentration of the sensor probe was chosen to be between 0.5 $\mu$M and 20 $\mu$M, preferably between 1 $\mu$M and 10 $\mu$M, preferably between 2 $\mu$M and 5 $\mu$M, in one embodiment about 1 $\mu$M in case of a LASER with 0.25 mW of nominal power, fiber diameter of 200$\mu$m and NA (0.22).

As fluorochrome one may use any of the following dyes: Methoxycoumarin, DyLight®, Alexa Fluor®, Brilliant Violet 421™, HiLyte Fluor™, DyLight®, Alexa Fluor®, Aminocoumarin (AMCA), BD Horizon™, Pacific Blue™, EviTagTM quantum dots-Lake Placid Blue, AMCyan, BD Horizon™, Cy2®, Chromeo™, DyLight®, Alexa Fluor®, FAM, Fluorescein Iso-thiocyanate (FITC), Evi-Tag™ quantum dots-Adirondack Green, Chromeo™, HiLyte Fluor™, Alexa Fluor® (405, 488, 514, 532, 546, 555, 568, 633, 647, 660, 680, 700, 750, 790), EviTag™, quantum dots-Catskill Green, Pacific Orange™, HEX, EviTagTM quantum dots-Hops Yellow, Cy3®, 5-TAMRA, Phycoerythrin (PE), Tetramethyl Rhodamine Isothiocyanate (TRITC), EviTag™ quantum dots-Birch Yellow, Cy3.5®, Rhodamine Red-X 570 590, PE-Dyomics®, EviTagTM quantum dots-Fort Orange, ROX, Red 613, Texas Red®, PE-Texas Red®, EviTagTM quantum dots-Maple-Red Orange, Allophycocyanin (APC), Quantum Red, Cy5®, PE-Cy5®, SureLight® P1, PE-Dyomics®, Peridinin Chlorophyll (PerCP), IRDye® 700DX, PE-Cy5.5®, APC-Cy5.5®, TruRed, APC-Cy7®, Cy7®, PE-Dyomics®, Dy-Light®, PE-Cy7®, IRDye® 800RS, DAPI, Hoechst 33258, Hoechst 33342, SYTOX Blue, YOYO-1, SYTOX Green, TOTO-1, TO-PRO-1, Mithramycin, SYTOX Orange, Chromomycin A3, CyTRAK Orange™, Ethidium Bromide, Propidium iodide (PI), DRAQ5™ and DRAQ7™, and/or combinations thereof.

The sensor vessel of the present invention is adapted especially to the excitation by LASER light. In one embodiment the sensor vessel (1) of the present invention is adapted to a LASER which emits light at a wave length of at least one of the wave lengths selected from 325, 360, 405, 407, 488, 514, 532, 543, 568, 595, 633, 635 and/or 647 nm. The nominal power of the LASER may be between 1 mW and 3 W, preferably 5 mW to 1W, in some embodiments about 10 mW, 25 mW, 50 mW, 100 mW, 200 mW, 300 mW, and up to 1 W, 2 W, 3 W. Higher nominal power may lead to heating of the carrier element and/or probe, lower nominal power usually does not generate enough signal. In general the number of photons (and related with this the emitted optical power) which reach the carrier element should be between $2\times10^{15}$ and $5\times10^{15}$ photons/s, for example about $3.2\times10^{15}$ photons/s. Of course this may be further adapted to the concentration of immobilized probes and optical activity of the used fluorochrome. In one embodiment a 532 nm LASER (diode LASER) with nominal power applied to the sample of about 0.25 mW is used.

Another parameter to be considered is distance between the optical elements in lateral direction. The optical elements (such as fiber-fiber-contacts or fiber-carrier-element-contacts) should be in "physical contact", that is allowing a transmission of at least 80% or better, preferably 90% or better, more preferably 95% or better, most preferably 99% or better. In some embodiments the distance between the fibers /depends on the numerical aperture (NA). In some embodiments, for the fibers with NA=0.35 the maximally allowed distance should be no bigger than < 350 $\mu$m, < 300 $\mu$m, < 200 $\mu$m, < 100 $\mu$m, < 50 $\mu$m, < 10 $\mu$m, < 1 $\mu$m. For the NA=0.22 the distance should be < 220 $\mu$m, < 200 $\mu$m, < 100 $\mu$m, < 50 $\mu$m, < 10 $\mu$m, < 1 $\mu$m, < 0.5 $\mu$m for the NA=0.1 the distance should be < 100 $\mu$m, < 50 $\mu$m, < 10 $\mu$m, < 1 $\mu$m, < 0.25 $\mu$m, etc.

A similar high precision needs to be present at the interface between the sensor vessel (1) (i.e. the ferrule (8)) and the analyzing device (19).

In a further aspect of the invention the transparent carrier-element (6) comprises sensor-probes with immobilizing fluorescent/luminescent tags. The carrier-element is preferably a polymer, in particular a liquid swelling polymer. Examples are agarose gel, hydrogel, polyamide gel, polyester gel, polyacrylamide gel, polyethylene glycol gel and/or other hydrogel. In one embodiment the carrier-element (6) is fitted into the sensor vessel in liquid state and then forms a semi-solid gel inside the undercut space which is dedicated to hold the carrier element. In another embodiment the carrier element may be produced in specific forms, hardened to its semi-solid phase and then places in the sensor vessel. In any case the carrier element needs to be in close contact with the light conduction element (11) either in direct physical contact or separated only by a thin quartz glass.

In the inventive method, the polymer has at least the following functions:

(1) immobilization of a large number of sensor-probes within the polymer, preferably via covalent binding;

(2) facilitating the hybridizing or binding of the sensor-probes to target molecules from the biological sample;

(3) facilitating the purification of the target molecules from other molecules in the buffer solution and

(4) immobilizing the sensor-probes with their fluorochromes in a close proximity to the outlet of an optical fiber so that the energy shift of the emitted light appearing in result of hybridization and/or binding has larger probability of coupling to the optical fiber.

The carrier-element (6) itself has a spectral transmission of at least 95%, preferably of at least 98%, most preferably of $\geq$ 99% at a wavelength between 500 nm and 700 nm.

Agarose and polyacrylamide are well known in molecular biology laboratory application, and in particular easy to adapt for binding and absorbing specific molecules. The adaptation is related/dependent on molecular size of the target.

The adaptation to the molecular size can be performed via the polymer mesh size by molecular weight (for example in some embodiments 4 wt.-%, in other embodiments 7.5 wt.-%, in further embodiments 12 wt.-%) of the polymer and its monomer ratio (e.g. in one embodiment, in case of virus RNA, acrylamide / bisacrylamide with a ratio of between 30:1 to 45:1, preferably 37.5:1). For large targets, the molecular weight of the polymer should be decreased and content of the monomer should be increased.

Fur guidance of the skilled person some useful ratios between acrylamide and bisacrylamide are depicted as follows:

- a ratio of between 15:1 to 22:1, preferably of 18:1 to 20:1, most preferably of about 19:1 is suitable for the separation of peptides

- a ratio of between 25:1 to 33:1, preferably of 28:1 to 30:1, most preferably of about 29:1 is used for the separation of proteins.

- a ratio of between 30:1 to 45:1, preferably of 35:1 to 40:1, most preferably about 37.5:1 is used for larger nucleic acids such as a virus RNA.

In a method according to the invention, the carrier-element (6) preferably contains at least 20 nmol/l, preferably at least 1 $\mu$mol/l, preferably at least 2.5 $\mu$mol/l, preferably at least 5 $\mu$mol/l of the sensor-probe (comprising a fluorescent and/or luminescent tag) such as a molecular beacon or target-binding molecule. In this method, almost every target molecule migrating into the carrier-element (6) is immediately in contact with a sensor-probe (comprising a fluorescent and/or luminescent tag) that is a molecular beacon ready for hybridizing and/or target-binding molecule that is ready for binding.

In one embodiment the carrier element (6) comprises a sensor probe which has a size of between about 3 kDa and 180 kDa. In case of the sensor probe being molecular beacon probe(s), the size is between 10 to 40 nucleotides, i.e. between 3 kDa and 10 kDa. In case of the sensor probe being a target-binding molecule(s), such as Fab-fragments and/or antibodies and the like, the size is preferably between 20 kDa and 180 kDa.

In one embodiment the carrier element (6) is configured to measure macromolecules of between 0.2 and 540 kDa size; preferably between 0.2 - 2.5 in case of lipids, at least 4.5 kDa size in case of nucleic acids, of at least 5.5 kDa size in case of peptides, of 6 kDa to 540 kDa size in case of proteins.

In one embodiment the carrier element (6) has a volume of between 25 µl and 500 µl, preferably between 50 µl and 250 µl. In one preferred embodiment it has been found that already about 50 µl of carrier element provides sufficient volume to carry sufficient sensor probes in order to a generate a sufficient detection signal.

In one embodiment the polymer of the polymer of the carrier element (6) within the sensor vessel (1) has a gelating temperature of about 36°C ± 1.5 °C to 42°C ± 1.5, a melting point of about 87°C ± 1.5°C to 88°C ± 1.5°C, and an electro-endosmotic flow (EOF) of between 0.27-0.42, preferably of 0.31-0.37.

The term "electro-endosmotic flow (EOF)" (also called electroosmotic flow) as used herein is the motion of liquid induced by an applied potential across a porous material, capillary tube, membrane, microchannel, or any other fluid conduit. Electro-endosmotic flow is most significant when in small channels and an essential component in chemical separation techniques, notably capillary electrophoresis. It is important for the carrier element (6) to possess an electro-endosmotic flow (EOF) in a certain range in order to guarantee a high selectivity of the target macromolecule, which results in a high accuracy of the measurement.

The electro-endosmotic flow can be described by the following formula:

$$v_{eo} = \mu_{eo} \cdot E$$

wherein $v_{eo}$ describes the electroosmotic flow (EOF), $\mu_{eo}$ the electroosmotic mobility and E the electric field strength.

In a further aspect of the invention the sensor-probe within the carrier element (6) is selected from a molecular beacon, a target-binding molecule, and/or a combination thereof. In any case the sensor-probe comprises a fluorescent and/or luminescent and/or phosphorescent tag.

As mentioned above, present invention comprises the step of bringing the carrier element (6) in contact with a biological sample, wherein the sensor-probe is immobilized in the carrier element (6).

In one embodiment the sensor-probe is a molecular beacon (i.e. nucleic acid such as for example an aptamer or RNA-probe) and/or a target-binding molecule (i.e. an antigen-binding molecule, such as an antibody, fab-fragment, anticalin, or the like). The carrier element (6), comprising the sensor-probe, is in close contact with the light conducting element (11) which lets the exciting light pass from the optical analyzing-device to the carrier and lets the emitted (induced luminescence/fluorescence/phosporescence) light pass back to the optical analyzing device.

In one embodiment the method according to the invention preferably a peak wavelength of the detected light is defined that is specific to a hybrid of the target and the probe, and if the emitted light has the peak wavelength, it is concluded that the target is in the sample. This method is based on the finding that each target-probe hybrid has a unique wavelength of emitted light, and allows for identifying any known target, in a patient's sample.

In particular, the peak wavelength $\lambda_{em}$ may be calculated from $h * c / \lambda_{em} = h * c / \lambda_{ref} - E_o$, wherein $\lambda_{ref}$ is a reference emission of the fluorescent dye without hybridization, h is the Planck constant, c is the speed of light and $E_0$ is the hybridization energy of the target-probe hybrid, as known from Santalucia J Jr, Proc. Natl. Acad. Sci. USA 95 (1998) and calculated in terms of Nearest-Neighbor (NN) model, where change of the energy is 0.0243 eV. In some embodiments the change of the energy is between 0.01 - 0.05 eV, preferably between 0.02 - 0.03 eV, however, in some embodiment the energy may be up to 0.1 eV or even up to 0.2 eV.

In this respect it is important to note that the energy change of the peak wavelength upon hybridization and/or binding is measured (depicted as a shift from E1 to E2', respectively, E2", depending on the concentration of target bound to the probe in figure 6; see also figure 7 for a more generalized picture). Thus, this method allows in some embodiments not only a qualitative, but also a quantitative measurement.

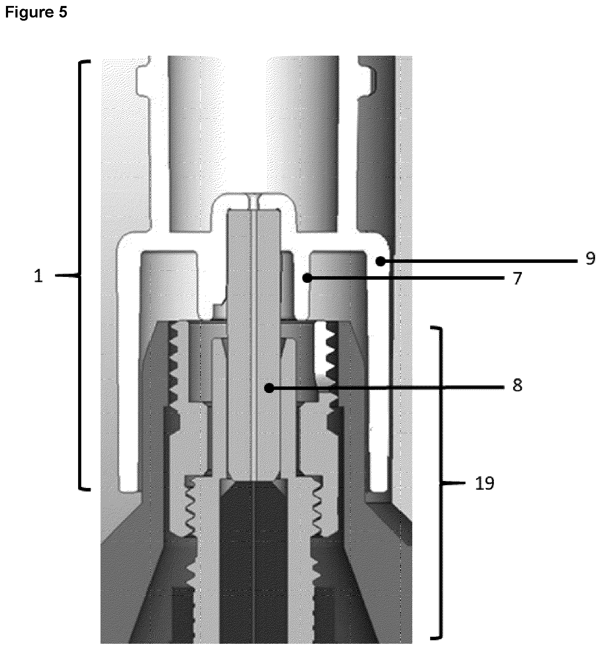

This measurement is not to be confused with prior art methods based for example on fluorescence excitation and/or FRET. The measurement of the present invention rather relies on the reduction of total energy of the complex as compared to the single molecules, which is reduced after hybridization and/or binding (see also figures 5 and 6).

In one embodiment, especially in case of nucleic acid measurements, the sensitivity of the measurement allows the detection of less than 150 RNA-molecules, less than 100 RNA-molecules, less than 50 RNA-molecules in a 50 µl-sample, in further embodiments the detection of less than 25 RNA-molecules and in one embodiment the detection of 10-12 RNA-molecules. In fact, it has been surprisingly found that this energy-change allows in one embodiment the detection of as little as 10-50 RNA-molecules in a sample or per reaction.

In another embodiment the measurement allows even the differentiation between slightly different molecules, such as for example RNA/-DNA-samples with less than 5, preferably less than 3 nucleotides, most preferably with just one nucleotide difference. This allows the differentiation between different mutants or strains, e.g.

different viral mutants and/or MRSA-strains.

In case of larger numbers of target macromolecules, such as in nano-molar-range or, preferably, micro-molar-range or, preferably, millimolar-range, as it may be the case of biomarkers found for example in blood samples, a quantitative measurement offers beneficial accuracy/precision in comparison with diagnostic methods used now (such as selective electrodes, titration methods etc.).

In one aspect the invention pertains to labeling a biomarker with the sensor-probe. Such a biomarker may be a nucleic acid contained in a patient's sample. According to the present invention in case of nucleic acids the sensor-probe is a molecular beacon. The sensor-probe (in this embodiment the molecular beacon) is immobilized to the carrier element (6) and hybridizes to the target nucleic acid under appropriate conditions. The buffer-solution (5) supports the lysis of the biological sample and the hybridization process. It is not necessary to extract the target nucleic acid (RNA or DNA) in advance since the method is very sensitive and is able to detect less than 20, preferably less than 10 copies per test. However, depending on the sample obtained, extraction of the target nucleic acid by generally known methods and/or commercially available extraction kits may be applied. In addition, when a double-stranded nucleic acid (DNA or RNA) has to be detected a strand separation can be made in advance or simultaneously with the hybridization. This strand separation may be conducted e.g. chemically could be performed simultaneously, or with UV-light or by heat treatment to be made in advance.

In a further aspect the invention pertains to labeling a biomarker such as a macromolecule (such as peptides, proteins, carbohydrates or lipids) contained in a patient's sample (e.g. blood-sample, liquor-sample and/or saliva sample comprising the target macromolecule) with a sensor-probe. According to the present invention in case of other macromolecules besides nucleic acids (such as peptides, proteins, carbohydrates or lipids) the sensor-probe is a target-binding molecule. The sensor-probe is immobilized to the carrier element (6) and binds to the target macromolecules (such as peptides, proteins, carbohydrates or lipids) under appropriate conditions. The buffer-solution (5) supports the lysis of the sample and the hybridization process. It is not necessary to extract the macromolecules (such as peptides, proteins, carbohydrates or lipids) in advance since the method is very sensitive, recognizing already less than about 1 μM, in a preferred embodiment less than 1 nM, most preferably less than 1 pM in a sample. However, depending on the sample obtained, extraction of the macromolecules (such as peptides, proteins, carbohydrates or lipids) by generally known methods and/or commercially available extraction kits may be made in advance.

As used herein, "nucleic acid" or "polynucleic acid" refers to the order or sequence of nucleotides along a strand of nucleic acids. The nucleic acid sequence may be single-stranded or double-stranded or contain portions of both double-stranded and single-stranded sequences. The nucleic acid sequence may be composed of DNA, both genomic and cDNA, RNA or DNA/RNA hybrid.

As used herein, "macromolecule" refers to any large biomolecule including nucleic acids, peptides, proteins, carbohydrates or lipids.

As used herein, "peptide" refers to short chains of between two and fifty amino acids, linked by peptide bonds. Chains of fewer than ten or fifteen amino acids may also be called oligopeptides, and include dipeptides, tripeptides, and tetrapeptides.

As used herein, "protein" refers to large biomolecules that are comprised of one or more long chains of amino acid residues. Proteins perform a vast array of functions within organisms, including catalysing metabolic reactions, DNA replication, responding to stimuli, providing structure to cells and organisms, and transporting molecules from one location to another. Proteins differ from one another primarily in their sequence of amino acids, which is dictated by the nucleotide sequence of their genes, and which usually results in protein folding into a specific 3D structure that determines its activity.

As used herein, "carbohydrate" refers to a biomolecule consisting of carbon (C), hydrogen (H) and oxygen (O) atoms, usually with a hydrogen-oxygen atom ratio of 2:1 (as in water) and thus with the empirical formula $C_m(H_2O)_n$ (where $m$ may or may not be different from $n$). However, not all carbohydrates conform to this precise stoichiometric definition (e.g., uronic acids, deoxy-sugars such as fucose), nor are all chemicals that do conform to this definition automatically classified as carbohydrates (e.g. formaldehyde). It is used herein primarily as a synonym of saccharide, a group that includes sugars, starch, and cellulose.

As used herein, "lipid" refers to a macro biomolecule that is soluble in nonpolar solvents. Nonpolar solvents are typically hydrocarbons used to dissolve other naturally occurring hydrocarbon lipid molecules that do not (or do not easily) dissolve in water, including fatty acids, waxes, sterols, fat-soluble vitamins (such as vitamins A, D, E, and K), monoglycerides, diglycerides, triglycerides, and phospholipids. As such the term encompasses fatty acids, glycerolipids, glycerophospholipids, sphingolipids, sterols, prenols and saccharolipids.

As used herein the term "sensor-probe" is used herein for any molecule which is able to specifically bind to a target molecule, i.e. via hybridization and/or other binding modes, such as for example via van-der-Waals-bonds, covalent bonds and/or hydrogen bonds. Thus, the term "sensor-probe" without further definition encompasses "molecular beacons", or "(molecular beacon) probes", as well as "target-binding molecules" (such as for example antibodies).

As used herein, the terms "target/sensor-probe molecule complex" or "complex" are used in a general manner for any group of two or more associated molecules. For example such an association may be the hybridization of the molecular beacon and the target nucleic acid and/or the binding of the target-binding molecule and the target macromolecule. The complex is excited by light and the emission is detected in the analyzing device.

As used herein, "molecular beacons" are oligonucleotides that can report the presence of specific nucleic acids in homogenous solutions. Molecular beacons are hairpin-shaped molecules with a fluorochrome. This is a novel nonradioactive method for detecting specific sequences of nucleic acids. They are useful in situations where it is either not possible or desirable to isolate the molecular beacon-target hybrids from an excess of the molecular beacons.

A typical molecular beacon is 25-40 nucleotides long. The middle nucleotides are complementary to the target DNA or RNA and do not base pair with one another, while the five to seven nucleotides at each terminus are complementary to each other rather than to the target DNA.

A typical molecular beacon structure can be divided in 4 parts: 1) loop, an 18-30 base pair region of the molecular beacon that is complementary to the target sequence; 2) stem formed by the attachment to both termini of the loop of two short (5 to 7 nucleotide residues) oligonucleotides that are complementary to each other; 3) 5' fluorescent dye at the 5' end of the molecular beacon, a fluorescent dye is covalently attached; 4) 3' quencher (non-fluorescent) dye that is covalently attached to the 3' end of the molecular beacon. When the beacon is in closed loop shape, the quencher resides in proximity to the fluorescent dye, which results in quenching the fluorescent emission of the latter. If the nucleic acid to be detected is complementary to the strand in the loop, the event of hybridization occurs. The duplex formed between the nucleic acid and the loop is more stable than that of the stem because the former duplex involves more base pairs. This causes the separation of the stem and hence of the fluorescent dye and the quencher. Once the fluorescent dye is no longer next to the quencher, illumination of the hybrid with light results in the fluorescent emission. The presence of the emission reports that the event of hybridization has occurred and hence the target nucleic acid sequence is present in the test sample. The fluorescent dye of the molecular beacon may be any suitable fluorescent dye, for example ABI dyes (e.g. FAM™, HEX™, TET™, JOE™, ROX™, CAL Fluor™ Red 610), cyanine dyes (e.g. Yakima Yellow or ATTO) or molecular dyes (e.g. ALEXA-fluor or BODIPY dyes). The quencher of the molecular beacon may be any suitable quencher, for example TAM, BHQ1, BHQ2, DAB, Eclip, BBQ650. Molecular beacons are synthetic oligonucleotides whose preparation is well documented in the literature (Tyagi S; Kramer FR, (1996). "Molecular beacons: probes that fluoresce upon hybridization". Nat. Biotechnol. 14 (3): 303-308). Further, the molecular beacon design is within the skill of a molecular biologist and there are many bioinformatics tools for this purpose available (e.g. Beacon DesignerTM). In addition, molecular beacons are commercially available for many target sequences (e.g. Eurofins Genomics, Ebersberg, Germany; Integrated DNA Technologies, Inc., Coralville, Iowa, USA).

In the context of this invention, "hybridization" means hydrogen bonding, which may be Watson-Crick, Hoogsteen or reversed Hoogsteen hydrogen bonding, between complementary nucleoside and/or nucleotide bases. Hybridization takes place under stringent or non-stringent conditions. As used herein, "stringent" refers to the conditions, i.e. temperature, buffer composition or ionic strength under which hybridization between polynucleotides occurs. These conditions depend mainly on the composition and complexity of the target nucleic acid and length of the molecular beacon probe.

For the hybridization temperature conditions the "$T_m$" (melting temperature) of the nucleic acids has to be considered. "$T_m$" means under specified conditions the temperature at which half of the nucleic acid sequences are disassociated and half are associated. Generally, suitable hybridization conditions may be easily determined by a person skilled in the art.

"Complementary" as used herein, refers to the capacity for pairing between two nucleotides. For example, if a nucleotide at a certain position of an oligonucleotide is capable of hydrogen bonding with a nucleotide at the same position of a DNA or RNA molecule, then the oligonucleotide and the target DNA or RNA are considered to be complementary to each other at that position. For example, the sequence 5'-A-C-T-3' is complementary to the sequence 3'-T-G-A-5'.

Complementarity may be partial, in which only some of the nucleotides match according to base pairing, or complete, where all the nucleotides match according to base pairing. For purposes of the present invention "substantially complementary" refers to 90% or greater identity over the length of the target base pair region. The complementarity can also be 45, 50, 60, 70, 75, 80, 85, 90, 91, 92, 93, 94, 95, 96, 97, 98, 99, or 100% complementary, or any amount below or in between these amounts. In other words, the oligonucleotide and the target DNA or RNA are complementary to each other when a sufficient number of corresponding positions in each molecule are occupied by nucleotides which can build a hydrogen bond with each other. Thus, "specifically hybridizable" and "complementary" are terms which are used to indicate a sufficient degree of complementarity or precise pairing such that stable and specific binding occurs between the molecular beacon probe and the DNA or RNA target. It is understood in the art that the molecular beacon probe does not need to be 100% complementary to that of its target nucleic acid to be specifically hybridizable. "Oligonucleotide" refers to an oligomer or polymer of ribonucleic acid (RNA) or deoxyribonucleic acid (DNA) or mimetics thereof. This term includes oligonucleotides composed of naturally-occurring nucleobases, sugars and covalent internucleoside (backbone) linkages as well as oligonucleotides having non-naturally-occurring portions which function similarly.

As used herein, "target-binding molecule" refers to a molecule, preferably a protein, which is able to specifically bind to a target macromolecule (such as a peptide, protein, carbohydrate or lipid) in a sample. Such a target-binding molecule may be selected from the group comprising antibody, antibody-fragment, Fab-fragment, anticalin protein, DARPin, nanoCLAMP, affilin, affimer, affitin, alphabody, avimer, Kunitz domain peptide, monobody, intrabody, microantibody, single-chain variable fragment (scFv), and combinations thereof. Target-binding molecules typically bind to unique surface patterns on the target macromolecule, sometimes referred to as "epitope".

As used herein, "specifically binding" refers to the binding of the target-binding molecule to the target macromolecule (such as a peptide, protein, carbohydrate or lipid) in a sample with a high specificity. The fewer ligands a protein can bind besides the desired target, the greater is its specificity. Specificity describes the strength of binding between a given protein and ligand. This relationship can be described by a dissociation constant ($K_D$), which characterizes the balance between bound and unbound states for the protein-ligand system. $K_D$ is the equilibrium dissociation constant, a calculated ratio of $K_{off}/K_{on}$, between the target-binding molecule and its target. The association constant ($K_{on}$) is used to characterise how quickly the target-binding molecule binds to its target. The dissociation constant ($K_{off}$) is used to measure how quickly a target-binding molecule dissociates from its target. The specificity of the target-binding molecule is at least micromolar ($\mu M$, $K_D$ between $10^{-4}$ to $10^{-6}$), more preferably nanomolar (nM, $K_D$ between $10^{-7}$ to $10^{-9}$), even more preferably picomolar (pM, $K_D$ between $10^{-10}$ to $10^{-12}$), and most preferably femtomolar (fM, $K_D$ between $10^{-13}$ to $10^{-15}$).

"Subject" or "patient" as used herein refers to a living organism, such as a mammalian individual, including murines, cattle, simians and humans. Preferably, the patient is a human.

"Biological sample" or just "sample" as used herein refers to a biological sample encompassing liquid and solid samples. Liquid samples encompass saliva, sputum, sweat, urine, nasal secretion, bronchoalveolar lavage fluid, laryngo-pharyngeal scrape test, vaginal secretion, blood liquids (e.g. serum, plasma) and cerebrospinal fluid (CSF). Solid samples encompass tissue samples such as tissue cultures or biopsy specimen. A preferred patient's sample is sputum. The patient's sample will be collected with the disposable pipette as described below.

In a particular preferred embodiment of the present invention, the method is used for detecting a biomarker (including pathogens) in a patient's sample.

"Biomarker" as used herein, is a measurable indicator of some biological state or condition. Biomarkers are often measured and evaluated using blood, urine, or soft tissues to examine normal biological processes, pathogenic processes, or pharmacologic responses to a therapeutic intervention. As such the invention pertains to labeling a biomarker such as a macromolecule (such as nucleic acids, peptides, proteins, carbohydrates or lipids) contained in a patient's sample (e.g. blood-sample, liquor-sample and/or saliva sample comprising the target macromolecule) with a sensor-probe. For simplification the definition of "biomarker" within this application encompasses also pathogens.

"Pathogens" as used herein, is any organism that can produce disease. A pathogen may also be referred to as an infectious agent, or simply a germ. Typically, the term is used to describe an infectious microorganism or agent, such as a virus, bacterium, protozoan, prion, viroid, or fungus.

In one embodiment of the present invention, the method is used for detecting a target macromolecule (such as a nucleic acid, peptide, protein, carbohydrate or lipid) in a patient's sample. In general any target macromolecule can be measured if a target-binding molecule with sufficient specificity can be produced against such target macromolecule. In a preferred embodiment the target macromolecule (such as a nucleic acid, peptide, protein, carbohydrate or lipid) is indicative of a pathogen, a disease or pre-condition for a disease. Thus, any biomarker macromolecule (such as a nucleic acid, peptide, protein, carbohydrate or lipid) relevant in a medical context, i.e. associated with a medical condition and/or disease, may be detected.

In one embodiment of the present invention, the method is used for detecting a virus in a patient's sample. "Virus" or "viral" means any single- or double-stranded DNA or RNA virus. In particular, Human Immunodeficiency Virus (HIV), Zika, MERS-Corona, SARS-CoV-1, Sars-CoV-2, Hepatitis B Virus (HBV), Hepatitis C Virus (HCV), Human Lyphotropic Virus-type 1-4 (HTLV-1 - 4), Epstein-Barr Virus (EBV), Human Papilloma Virus (HPV), Influenza A, B or C, Non-Influenza Respiratory Viruses (NIRVs, e.g. respiratory syncytial virus, parainfluenza virus, rhinovirus, metapneumovirus), norovirus, Ebola virus, Reovirus, Herpes virus (simplex 1, 2 + B, 5, 6, 7, 8), Pox virus, FSME virus, Dengue virus, Rubivirus, Varizella zoster virus and Cytomegalievirus.

In yet another embodiment the present invention allows the detection of parasites, in order to detect for example malaria (parasite: *Plasmodium sp.*), *Giardia intestinalis,* Helminths, Toxoplasms, and the like.

In another embodiment, the present invention could be used to detect pathogens of the built environment, for example for food inspection (e.g. molds in legumes or grains), or for example control of humans (e.g. human-immunodeficiency-virus, ebola virus, coronavirus (especially SARS-CoV-2, herpes virus, influenza, hepatitis virus, and the like), or control of livestock and/or other animals (e.g. *bovine spongiform encephalopathy, orthopoxvirus simiae, african horse sickness virus, afri-*

can swine fever virus, aquine infectious anemia virus, T. equigenitalis, porcine teschovirus, suid herpesvirus 1, aethina tumida, Tr. clareae and Tr. koenigerum, Trypanosoma equiperdum, equine herpesvirus 3, blue-tongue virus, virus of Borna's disease, bovine herpesvirus 1 & 3, bovine virusdiarrhoe-virus, brucella abortus, brucella melitensis, brucella ovis, brucella suis, campylobacter ssp., caprine arthritic-encephalitic-virus, rabbit hemorrhagic disease virus, chlamydophila abortus, chlamydophila spp., ebolavirus, echinococcus ssp., bovine leukaemia virus, mycoplasma hyopneuminiae, epizootic hemorrhagic disease virus, aphanomyces invadans, equine arteritis virus, parapoxvirus bovis 2, p. larvae, M. pluton, rhabdovirus carpio, pasteurella multocida, avian influenza, H. bovis, H. lineatum, mycoplasma ssp., infectious bursal disease virus, infectious hematopoietic necrosis virus, chicken herpesvirus 1, virus of infectious pancreatic necrosis, Koi-herpes virus, aphanomyces astaci, cryptosporidium ssp., leptospira ssp., L. monocytogenes, capripoxyvirus bovis nodularis, betaretrovirus, mycoplasma mycoides, mycoplasma capricolum, Maedi-Visna-virus, chicken-virus 2, foot-and-mouth-disease, bacillus anthracis, leporipoxvirus myxomatosis, neospora caninum, newcastle-disease virus, parapoxvirus ovis, M. paratuberculosis, peste des petits ruminants virus, alphavirus, capripox-virus ovis and caprae, T. byosalmonae, PRRS-virus, C. pseudotuberculosis, coxiella burnettii, sarcoptes scabiei, clostridium chauvoei, rift valley fever virus, bovine pestis virus, burkholderia mallei, salmonella ssp., orthopoxvirus, Schmallenberg-virus, SP-Virus, parapoxvirus bovis 1, vesicular stomatitis virus, rabiesvirus, toxoplasma gondii, prions, porcine coronavirus, trichinella ssp., tritrichomonas foetus, mycobacterium ssp., francisella tularensis, varroa destrcutor, swine vesicular disease virus, campylobacter fetus, E. coli, viral hemorrhagic septicemia virus, avipocvirus ssp., West-Nile-virus, parteurella multicida, yersinia ssp.).

Examples for human diseases are diabetes, cancer, metabolic diseases, cardio-vascular diseases, respiratory diseases, autoimmune-diseases, inflammations, organ malfunction, venereal diseases, and the like.

Of particular interest according to the present invention is the detection of a macromolecule selected from the list comprising, but not limited to inflammation markers such as C-reactive protein, ST2 (soluble interleukin 1 receptor-like 1), TNFalpha, GDF-15, FAS (APO-1), IL-1, osteoprotegerin, pentraxin, procalcitonin, cytokines, serine protease PR3, soluble endoglin, adiponectin, monocyte chemoattractant protein 1 (MCP-1), CD40 ligand and/or lipoprotein-associated phospholipase A(2) (Lp-PLA(2)); tumor markers such as AFP (alpha-Fetoprotein), beta-HCG, CEA (carcino-embryonic antigen), PSA (prostate-specific antigen), CA 125, CA 15-3, CA 19-9, CA 72-4, calcitonin, CgA (chromogranine A), pheochromocytoma (PHEO or PCC), CYFRA 21-1, NSE-tumormarkers (neuron-specific enolase), protein S100 and/or SCC-tumormarker (squamous cell carcinoma antigen); metabolic markers, such as insulin, cholesterol, triglyceride, and/or HDL cholesterol; cardio-vascular biomarkers such as troponin T & I, myosin light chain kinase I, heart-type FA binding protein, CKMB (creatine kinase), sFAS, HSP 60, sTRAIL, BNP (braintype natriuretic peptide), NT-proBNP (n-terminal braintype natriuretic peptide), MRproANP (mid-region atrial natriuretic peptide) and/or GDF-15 (growth/differentiation factor 15); marker for oxidative stress, such as oxidized LDL, MPO (myeloperoxidase), urinary biopyrins, urinary and plasma isoprostanes, urinary 8-hydroxyl-2'-deoxygunosine and/or plasma malondialdehyde; markers for extracellular matrix remodelling such as MMP-2/3/9, TIMP1 (TIMP metallopeptidase inhibitor 1), IL-6 (interleukin 6), collagen propeptides, N-terminal collagen type III peptide, myostatin, syndecan-4 and/or galectin-3; markers specific for certain diseases, such as Parkinson's disease, Alzheimer's disease (e.g. beta-amyloid or tau-protein), pulmonary embolism (e.g. D-dimer), etc.

In another preferred embodiment of the present invention, the method is used for detecting a bacterium in a patient's sample. Examples of bacteria that cause infections include Streptococcus, Staphylococcus, and E. coli.

In one preferred embodiment methicillin-resistant Staphylococcus aureus (MRSA) is detected by the inventive method. S. aureus is a Gram-positive, round-shaped bacterium, a member of the Firmicutes, and is a usual member of the microbiota of the body, frequently found in the upper respiratory tract and on the skin. It is often positive for catalase and nitrate reduction and is a facultative anaerobe that can grow without the need for oxygen. Although S. aureus usually acts as a commensal of the human microbiota it can also become an opportunistic pathogen, being a common cause of skin infections including abscesses, respiratory infections such as sinusitis, and food poisoning. Pathogenic strains often promote infections by producing virulence factors such as potent protein toxins, and the expression of a cell-surface protein that binds and inactivates antibodies. The emergence of antibiotic-resistant strains of S. aureus such as methicillin-resistant S. aureus (MRSA) is a worldwide problem in clinical medicine. Despite much research and development, no vaccine for S. aureus has been approved.

An estimated 20% to 30% of the human population are long-term carriers of S. aureus which can be found as part of the normal skin flora, in the nostrils, and as a normal inhabitant of the lower reproductive tract of women. S. aureus can cause a range of illnesses, from minor skin infections, such as pimples, impetigo, boils, cellulitis, folliculitis, carbuncles, scalded skin syndrome, and abscesses, to life-threatening diseases such as pneumonia, meningitis, osteomyelitis, endocarditis, toxic shock syndrome, bacteremia, and sepsis. It is still one of the five most common causes of hospital-acquired infections and is often the cause of wound infections following surgery. Each year, around 500,000 patients in hospitals of the United States contract a staphylococcal infection, chiefly by S. *aureus.* Up to 50,000 deaths each year in the USA are linked with S. *aureus* infections.

In a preferred embodiment of this invention MRSA can be detected by a DNA-probe directed to the *mecA/mecC* gene-sequence. The detection of said gene sequence by PCR is described in detail in J Clin Microbiol. 2016 Jan; 54(1): 180-184; published online 2015 Dec 30. The raw reads of the three isolates (RUO83 [t004], RUO140 [t003], and RUO159 [t004]) can be found in the European Nucleotide Archive (http://www.ebi.ac.uk/ena/) under study accession no. PRJEB10686.

In one embodiment in the method according to the invention, the target nucleic acid may in particular be a virus RNA. This method provides for screening large numbers of patients for infection, in an extremely reduced time scale, compared to the state of the art. The virus may in particular be a coronavirus, further in particular SARS-CoV-2. The method is thus applicable in a recent world-wide pandemic situation.

In another method according to the method of the invention, the target nucleic acid may be DNA, for example the DNA of MRSA. This method provides for screening large numbers of patients for MRSA-infection as well as even environments for MRSA-contamination, in an extremely reduced time scale, compared to the state of the art. The method is thus especially applicable in hospital environments where a large number of cases and/or samples need to be tested.

In another aspect of the invention the method can be applied to target other macromolecules such as peptides, proteins, carbohydrates or lipids in a patient. The inventive method may be used both for predictive a well as diagnostic purposes. Due to the simplification of use, even an application by the patient in his own household is envisaged. As such the inventive method may also be used within a "diagnosis at home" device.

In another embodiment the measurement allows even the differentiation between slightly different molecules, such as for example RNA/-DNA-samples with less than 5, preferably less than 3 nucleotides, most preferably with just one nucleotide difference. This allows the differentiation between different mutants or strains, e.g. SARS-CoV-2 mutants and/or MRSA-strains.

In case of larger numbers of target macromolecules, such as in nano-molar-range or, preferably, micro-molar-range or, preferably, millimolar-range, as it may be the case of biomarkers found for example in blood samples, a quantitative measurement becomes especially feasible.

Thus, one application of the sensor vessel, may be regular tests, for example in hospitals, health centers, retirement homes, and the like, but also, especially in case of pandemics, in hotels, planes, cruise ships, airports, train stations, etc.

In one particular embodiment the sensor vessel may be used for screening blood samples in order to avoid contamination with HIV, hepatitis, syphilis, etc..

In another particular embodiment the sensor vessel may be used for screening patients, staff, livestock and environments for MRSA-contamination.

Within this application several terms are used to describe the optical characteristics of different materials. As used herein the term "optically clear" refers to a material which shows a transmissibility of the light at least in the detection wavelength of 500 to 700 nm of at least 95% or more, preferably of 98% or more, most preferably of 99% or more, such as more than 99.9%, more than 99.95%, more than 99.99%. Optically clear also implies that the material does not show any fluorescent effects neither in itself, nor on the sensor-probe alone or bound to the target molecule (i.e. the biomarker). Furthermore, "optically clear" materials preferably do not absorb and/or scatter the light.

As used herein the term "optically inactive" refers to a material which shows weak (a few %, i.e. 0.1%, 0.5%, 1%, less than 5%, less than 2.5%) to no transmissibility of the light at least in the in the detection wavelength of 500 to 700 nm. For example a transmission of 0.01% or less, preferably of 0.001% or less, most preferably of 0.0001% and even better less than the detection limit. Furthermore, the term "optically inactive" as used herein refers to a material which shows no other optical effects such as luminescence or phosphorescence upon excitation with light. According to the present invention "optically inactive" material is used to avoid any "light contamination", e.g. any light which comes from sources apart from the sensor-probe.

The list of optically inactive components/material comprises

- the material of the sensor vessel (1)

- the material of the ferrule (8)

- the glue (12), if such is used, for fixing the optical fiber (11) in the ferrule (8)

- preferably the glue for fixing ferrule (8) in the vessel (1), otherwise to be kept away from the volume exposed to the LASER light; and/or any combination thereof.

In present invention the carrier element (6) comprises the molecular beacon and/or the target-binding molecule embedded in a carrier element. After hybridisation (in case of nucleic acids) and/or specific binding (in case of other macromolecules such as a peptide, protein, carbohydrate or lipid), the complex of molecular beacon and/or target-binding molecule with the target molecule can be excited by light and the emission can be detected, resulting in a minimal invasive, fast (preferably less than 5 minutes, even more preferably less than 3 minutes, even more preferably less than 2 minutes), and a measurement with about 2 times, preferably about 3 times, more preferably about 5 times better accuracy as competitive systems.

In yet a further aspect the mount of the outer sleeve (9) of the sensor vessel (1) is configured to provide a contact pressure of between 0.5 and 3 N, in one embodiment of at least 1 N, preferably at least 2 N, preferably at least 3 N at the interface between the light conducting element and the optical analyzing device. Too low contact pressure may have a negative impact on the light yield at the optical interface, too high contact pressure may be difficult to exert and/or have negative impact on the usability. In some embodiments the correct contact pressure is achieved by fitting the outer sleeve (9) with a mount onto to the optical analyzing device, which is selected from the group consisting of a screw top mount, snap mount, bayonet mount and/or a spring loaded mount. In another embodiment a spring is mounted in axial direction in order to facilitate the necessary contact pressure of between 0.5 and 3 N, in one embodiment of at least 1 N. In one embodiment the mount shows the correct attachment to the optical analysis device by a tactile and/or acoustic feedback, such as a "click"-sound. The haptic and/or acoustic feedback is special advantage when technical laymen (i.e. non-medical personnel) are using the device. It has been found that surprisingly the overall error probability of the device can be reduced by 50% when using haptic and/or acoustic feedback.

In yet a further aspect the present invention pertains also to methods for producing the sensor vessel of the present invention and for producing the ferrule.

In yet a further aspect the present invention pertains also to uses of the sensor vessel of the present invention for the detection of biomarkers in a biological sample, such as a blood and/or saliva sample.

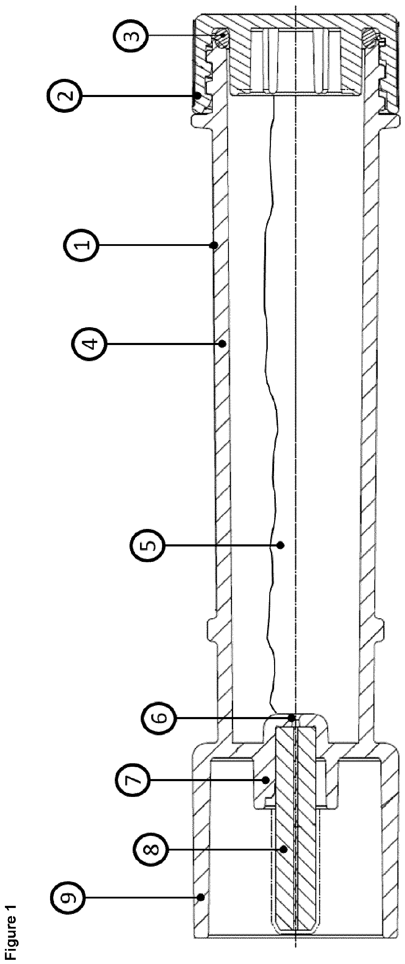

In one embodiment the present invention comprises a sensor vessel (1) according to figure 1. The sensor vessel (1) is configured for both collecting the patient's sample as well as conducting the measurement, thereby reducing significantly the efforts of sample handling (no pipetting, no RNA extraction, no mixing with a master mix primer-probe, no amplification thermal or isothermal such as needed for example in PCR-methods), reducing cost of goods and preventing contamination, both of the sample as well as of the user (e.g. in case of highly infective sample material).

The sensor vessel (1) comprises at least a buffer and a carrier element (6), which comprises the sensor-probe embedded in a polymeric matrix (being the molecular beacon and/or the target-binding molecule). In one embodiment the sensor vessel (1) further comprises a ferrule (8).

The immobilizing of the probe within the carrier element (6), especially covalent immobilization, has the advantage, especially in comparison with immobilisation on the surface of for example on an optical fiber, that the interface between the carrier element and the optical element is kept constant, and, due to the organisation in a three-dimensional space, much more probe can be condensed in a rather small volume. The probe is present in a predefined concentration, where amount of the probe copies (probe density) is at least 100, preferably 1000, preferably 10000 times higher as in case of conventional surface immobilised probes; furthermore spatial orientation is enhanced, resulting in an overall improvement of both specificity as well as sensitivity (and also accuracy). Thus, the three-dimensional embedding of the probe within the carrier is advantageous over any conventional method, where the probe is just immobilized on a two-dimensional surface.

The three-dimensional arrangement of the immobilized probe in the carrier element (6) results in the effect that the concentration of the target macromolecule is significant increased as compared to two-dimensional arrangements, thereby enhancing the accuracy, specificity and sensitivity of the measurement. Thus, the specific setup of the sensor vessel (1) allows the recognition of the target molecule with very high specificity of at least 75% and high sensitivity of at least 75%, resulting in an overall high accuracy of the test of at least 75%; in a preferred embodiment of at least 90% and high sensitivity of at least 90%, resulting in an overall high accuracy of the test of at least 90%, in an even more preferred embodiment of at least 95% and high sensitivity of at least 95%, resulting in an overall high accuracy of the test of at least 95%, in a most preferred embodiment of at least 96% and high sensitivity of at least 99%, resulting in an overall high accuracy of the test of at least 97,5%.

The specific setup of the carrier element (6) comprises a sensor-probe with an affinity to the target macromolecule of a KD of at least $10^{-4}$; preferably a KD of at least $10^{-7}$, preferably a KD of at least $10^{-10}$, preferably a KD of at least $10^{-13}$. In one embodiment a KD between $10^{-4}$ and $10^{-15}$, more preferred between $10^{-7}$ and $10^{-15}$, even more preferred between $10^{-10}$ and $10^{-15}$, most preferred between $10^{-7}$ and $10^{-15}$. In case of molecular beacons, i.e. in case of nucleic acids, especially for the detection of a point mutation, specific setup of the carrier element (6) allows an affinity constant of a 15mer-molecular beacon with a KD of 10-9 for a 100% hybridization-match and a KD of between $10^{-6}$ to $10^{-8}$, preferable of a KD of about 1.1 x $10^{-7}$ in case of one nucleotide difference between target and sensor-probe. In this case a good discrimination is possible between original nucleic acid and a point mutation using the inventive carrier element (6).

In a further embodiment excitation and emission wavelength depend on the specific physical properties of the dye used for the sensor-probe which immobilized in the carrier element (6). However, in general the dye is excited with a wavelength of between 300 and 1000 nm, preferably of between 350 and 750 nm, preferably of between 350 and 550 nm, preferably at about 350 to 500 nm. The detected emission wavelength is between 500 and 700 nm, preferably at about 550 to 600 nm.

In general any fluorochrome may be applied, however, preferred are dyes with high fluorescence yield and short fluorescence lifetime in order to enhance the sensitivity, which results in a higher accuracy.

In one embodiment the sensor vessel (1) is manufactured as a "ready-to-use" and "disposable" device, so that for each measurement a new sensor vessel (1) is used. This is especially advantageous in case of highly infective samples or otherwise biological hazardous samples. In another embodiment the sensor vessel (1) may be recyclable for conducting several measurements, thereby saving waste.

In one embodiment, the specific arrangement of the carrier element (6) with an optical element on one side and the sample-container on the other side allows the reduction of negative effects on the measurement and improves the accuracy further.

In yet a further embodiment also a kit of parts is encompassed, which comprises at least one member selected from the list comprising a sampling unit, a swab, a disposal bag, a user manual, a buffer solution, and a combination thereof.

Thus, the present invention is depicted by the following embodiments

In one aspect the present invention pertains to a sensor vessel/vessel (1), characterized in consisting of a reaction chamber (4), a ferrule (8) comprising of a light conducting element (11) and a sheath (10) encapsulating the light conducting element (11), and a transparent carrier-element (6) consisting of a sensor-probe with a fluorochrome.

In another aspect the present invention pertains to a sensor vessel (1) as described above, further comprising an element selected from the list comprising a lid (2), a sealing ring (3), a buffer-solution (5), an inner sleeve (7) configured to be fitted with the ferrule (8), an outer sleeve (9) configured to be fitted to an optical analyzing device and/or a combination thereof.

In yet another aspect the present invention pertains to a sensor vessel (1), wherein at least the reaction chamber (4) is made of a polymer selected from PE, PP, PVC, CA, PEF, COC, or, preferably, a compostable polymer, such as PBS, PLA, PHA, TPS, PCL, PBAT and/or any other biodegradable polymer according to EN 13432.

In one embodiment the reaction chamber (4) is made of a polypropylen-copolymer (PPC), which is softer any may simplify the use in certain analytical devices.

In yet another aspect the present invention pertains to a sensor vessel (1), wherein the light conducting element (11) is arranged in the center of the transparent carrier-element (6) and perpendicular to the surface of the transparent carrier-element (6) with an error deviation of less than 5°, preferably of less than 3°, preferably less than 2°, preferably less than 1°.

In yet another aspect the present invention pertains to a sensor vessel (1), wherein the buffer-solution (5) is configured to provide both the lysis of a sample as well as the hybridization and/or binding of the sensor-probe within the carrier element (6) to the target molecule, wherein the buffer-solution is optical inactive in a wavelength between 300 nm and 1000 nm, preferably between 500 nm and 700 nm.

In yet another aspect the present invention pertains to a sensor vessel (1), wherein the buffer-solution (5) comprises HEPES-NaOH at a pH of 8.5; NaCl, and/or MgCl2.

In yet another aspect the present invention pertains to a sensor vessel (1), wherein the carrier-element (6) is more than 90%, preferably more than 95%, preferably more than 99% transparent to light of a wavelength between 300 nm and 1000 nm, preferably between 500 nm and 700 nm and is made from a composition comprising agarose, acrylamide, bisacrylamide and/or a combination thereof.

In yet another aspect the present invention pertains to a sensor vessel (1), wherein the sensor-probe within the carrier element (6) is selected from a molecular beacon, a target-binding molecule, and/or a combination thereof.

In yet another aspect the present invention pertains to a sensor vessel (1), wherein the light conductor (11) is selected from an optical fiber, an optical glass fiber, a polymeric optical fiber, a plastic optical fiber and/or a combination thereof.

In yet another aspect the present invention pertains to a sensor vessel (1), wherein the sheath (10) is configured to pro-vide a lower refractive index as compared to the refractive index of the light conductor, resulting in a total reflection within the light conductor.

In yet another aspect the present invention pertains to a sensor vessel (1), wherein the light conductor (11) is glued to the sheath (10) with an adhesive (12) which is optical inactive in a wavelength between 300 nm and 1000 nm, preferably between 500 nm and 700 nm, selected from the group comprising high temperature epoxy (EPO-TEK) or UV curable epoxies or resins (NTT Advanced Technology Corporation).

In yet another aspect the present invention pertains to a sensor vessel (1), wherein the outer sleeve (9) is fitted with a mount onto to the optical analyzing device, which is selected from the group comprising a screw top mount, snap mount, bayonet mount and/or a spring loaded mount.

In yet another aspect the present invention pertains to a sensor vessel (1), wherein the mount of the outer sleeve (9) is configured to provide a contact pressure of at least 0.5 N, preferably of at least 1 N, and up to 5 N, preferably up to 2 N, at the interface between the light conducting element and the optical analyzing device.

In yet another aspect the present invention also pertains to process for producing the sensor vessel (1) according to any of the previous claims, comprising at least the steps of

a) molding the reaction chamber (4) out of a suitably polymer,

b) producing a ferrule (8) with a light conducting element (11),

c) fitting the ferrule (8) with a light conducting element (11) to the reaction chamber (4),

d) fitting a carrier element into the reaction chamber (4),

e) filling the reaction chamber (4) with buffer solution (5);

f) and fitting a lid to the reaction chamber (4),

g) thereby receiving the sensor vessel (1).

In yet another aspect the present invention also pertains to the use of the sensor vessel (1) as described, for the detection of a biomarker, including also pathogens, in a biological sample.

**Short description of the figures**

Figure 1 depicts a sensor vessel (1) according to the present invention as further specified in the examples;

Figure 2 depicts a ferrule (8) according to the present invention as further specified in the examples;

Figure 3 depicts an enhanced image of the interface between ferrule (8) comprising the sheath (10) and the light conductor (11) and inner sleeve (7) of the sensor vessel (1) as further specified in the examples.

Figure 4 depicts a potential composition of a light conduction element (11) comprising a light conducting "core" (15) (i.e. the optical fiber), which may be surrounded by a cladding (16), a coating and/or buffer (17); and a jacket (18).

Figure 5 depicts an exemplarily mounting of the sensor vessel (1) onto the analyzing device (19). Important features for the correct mounting are - *inter alia* - the inner sleeve (7), the outer sleeve (9) and the ferrule (8), as well as the facilitation of the correct contact pressure of between 0.5 to 3 N at the optical interphase. Important is also the precise alignment of sensor vessel (1) on the analyzing device (19) at the optical interface. The light-conducting elements need to be centered with an error-margin of less than $\pm 0.1\ \mu$m or less, preferably $\pm 0.05\ \mu$m or less, more preferably $\pm 0.02\ \mu$m or less; and perpendicular to each other with an error margin of less than $\pm 3°$, preferably $\pm 2°$ or less, preferably $\pm 1°$ or less, more

preferably $\pm 0.5°$ or less.

Figure 6 depicts a generalized image of the energy change upon binding of the macromolecular target to the probe.

Figure 7 depicts a generalized image of the different energy valleys when a macromolecular target ("molecule 1") is un-bound, the probe is un-bound ("molecule 2") or the macromolecular target is bound to the probe resulting in a complex.

Figure 8 depicts a different cross-sections of multicore-light conducing elements (11). Fig. 8A shows a 13 channel multicore element; fig. 8B depicts a multicore element, where the inner bundle of optical fibers is coated by a common cladding and surrounded by a wreath of further optical fibers also cladded each; fig. 8C depicts a multicore element, where the inner optical fiber is larger than the surrounding ones; fig. 8D depicts a multicore element with a large bundle of optical fibers packed tightly together to avoid or minimize any loss of light energy in the interspace of each fiber.

Figure 9 depicts different further embodiments of the sensor vessel (1) with and without contact to the optical analyzing device. Fig. 9A shows the sensor vessel (1) in contact to the optical analyzing device; fig. 9B shows a cross-section of the same contact between the sensor vessel (1) and the optical analyzing device; fig. 9C shows another embodiment of the sensor vessel (1), wherein the volume of the reaction-chamber was reduced in order to enhance the ratio between buffer and container size in order to allow the swabs still to be covered by buffer, but also save buffer solution.

**Examples**

Preferred embodiments of the invention are described with reference to the figures, showing

In fig. 1, a sensor vessel (1) according to the present invention;

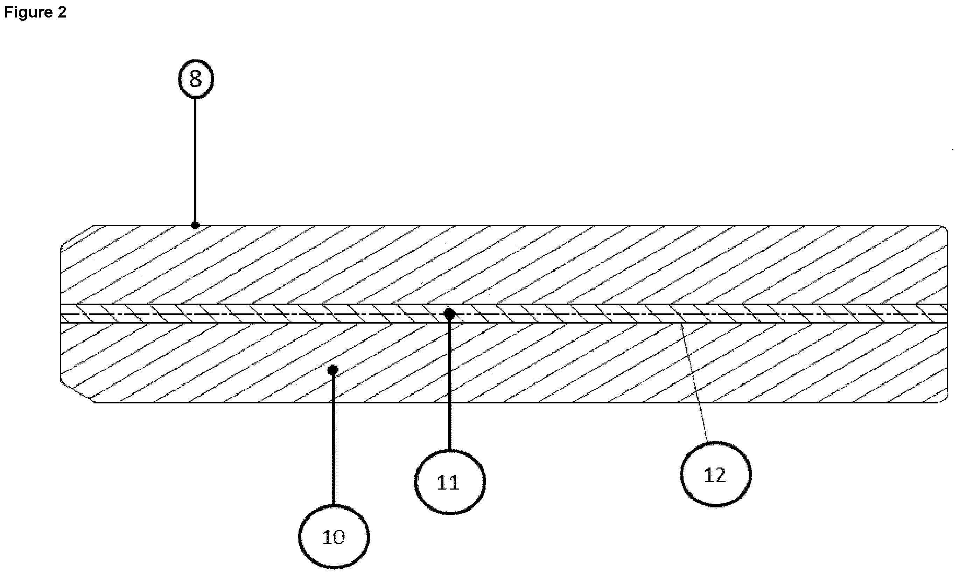

in fig. 2, a ferrule (8) according to the present invention;

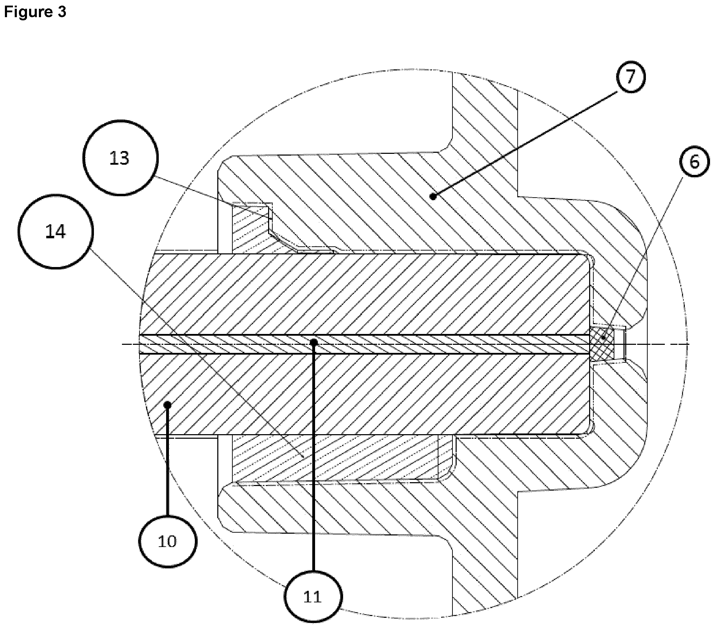

in fig. 3, an enhanced image of the interface between ferrule (8) comprising the sheath (10) and the light conductor (11) and inner sleeve (7) of the sensor vessel (1);

in fig. 4, a cross-section of the light-conducting element (11); and

(19); in fig. 5, an example for the mounting of the sensor vessel (1) onto the analyzing device

in fig. 6 a generalized depiction of the energy change upon binding of the macromolecular target to the probe;

in fig. 7 a general depiction of the different energy valleys when a macromolecular target ("molecule 1") is un-bound, the probe is un-bound ("molecule 2") or the macromolecular target is bound to the probe resulting in a complex;

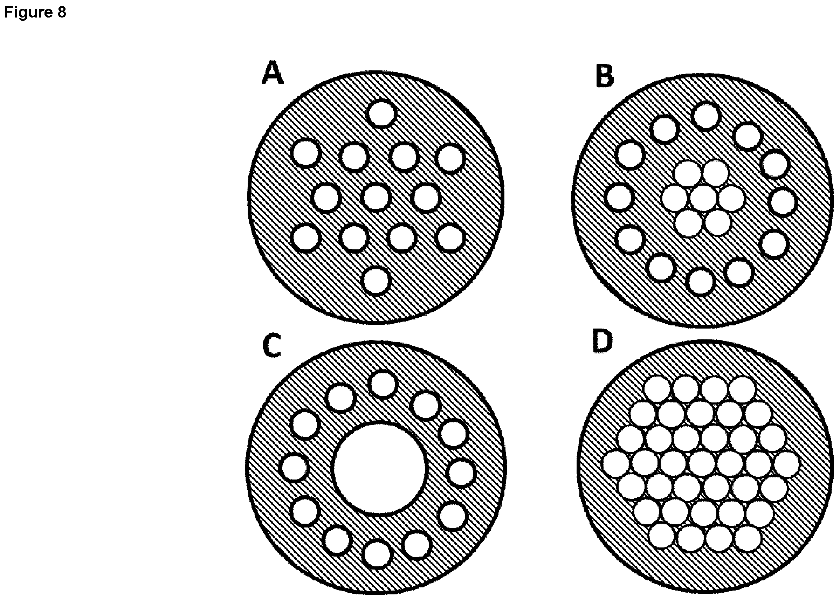

in fig. 8 different cross-sections of multicore-light conducing elements are shown;

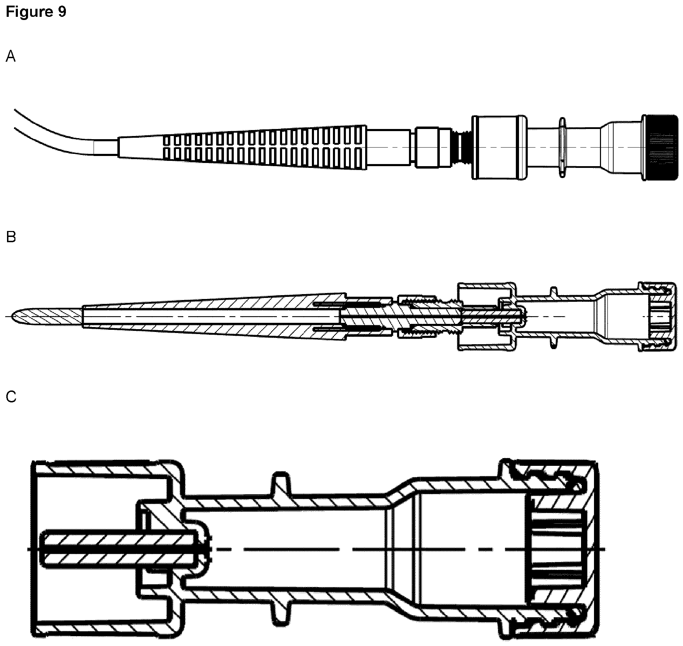

in fig. 9 further embodiments of the sensor vessel (1), in fig. 9A and B in contact with an optical analyzing device, are depicted.

Figure 1 shows an exemplary sensor vessel (1) according to the present invention. The sensor vessel (1) comprises a cover or lid (2) and a sealing ring (3). The sensor vessel (1) further comprises a container (4) which houses the reaction chamber for the analysis of the sample and a buffer-solution (5) which facilitates the lysis of the sample as well as the hybridization and/or binding of the target molecule to the sensor-probe. The sensor vessel (1) further comprises a carrier element (6) which comprises a sensor-probe (i.e. a molecular beacon and/or a target-binding molecule). The sensor vessel (1) further comprises an outer sleeve (9) configured to be fitted to an optical analyzing device and an inner sleeve (7) configured to hold the ferrule (8) which comprises a light conductor and a sheath (10).

Figure 2 shows an exemplary ferrule (8) comprising a sheath (10) where the case can be made of ceramic or steel or glass and a light conductor (11) such as an optical fiber. In some embodiments the sheath material can play role of the cladding.

Optionally, the light conductor is glued to the cladding with an optically clear adhesive (12). The ferrule (8) may be conical shaped at least one end in order to allow better insertion into the inner sleeve (7) of the sensor vessel. Furthermore the ends of the ferrule (8) may be high gloss polished to guarantee a high planarity and good optical transfer at the interfaces between the ferrule and the analyzing device on one side and the carrier element (6) on the opposite side. In order to avoid leakage of the polymer when filled in the hole provided for the carrier element (6), in one embodiment the hole for the carrier element (6) was drilled in a way that a protrusion of material of 1 - 3 $\mu$m remained so that upon the insertion of the ferrule (8) an water-tight sealing between the end of the ferrule and the outer rim of the hole for carrier element (6) was established. Said protrusion may not be too big, otherwise it will interfere with the correct positioning of the ferrule (8) or result in residual polymer to be shifted in the light conducting path, thereby interfering with the light transmission. In another embodiment the surfaces of the ferrule and the carrier element rim were treated with a hydrophobic substance to avoid any leakage by capillary force during insertion of the ferrule (8) into the sensor vessel. In yet another embodiment a sealing element, such as a polymeric sealing element (for example made of silicone, rubber, thermoplastic elastomer (TPE), thermoplastic rubber (TPV), etc.) may be applied to at least one surface of the contact area between the inner sleeve (7) and the ferrule (8) in order to prevent the carrier element (6) to leak out.

Figure 3 shows an enhanced image of the interface between ferrule (8) comprising the sheath (10) and the light conductor (11) and inner sleeve (7) of the sensor vessel (1). The inner sleeve (7) of the sensor vessel is configured to be fitted to allow a very accurate fit of the ferrule in a three-staged insertion process: 1. before pressing the ferrule a plasma activation of the surface of the inner sleeve (7) is made under atmospheric pressure; 2. the ferrule is fixed with between 1500 and 3000 nL, in one embodiment about 1900 nL UV-curing adhesive dispensed into the adhesive depot (14) and cured by UV light; 3. The inner diameter of the inner sleeve (7) is reduced, in one embodiment by about 0.05 $\mu$m $\pm$ 0.01 $\mu$m, as compared to the diameter of the ferrule, in order to guarantee a "*squeeze fit*" against the carrier element (6).

Optionally, the surface of the ferrule is high gloss polished to a roughness Ra of below 0.5 $\mu$m, preferably of below 0.4 $\mu$m, in some embodiments between 0.1 and 0.5 $\mu$m, preferably between 0.2 and 0.4 $\mu$m, in one embodiment about 0.3 $\mu$m in order prevent any surface errors at the interface between the carrier element (6) and the light conductor (11). In one embodiment the Ra is at least better as excitation wavelength 532 nm.

Optionally, the hole for the carrier element (6) is cylindrical, preferably formed as "undercut" with conical walls and/or with walls which comprise a surface modification (for example VDI 3400 ref. 12 to 45, wherein a VDI 3400 ref. 27 or higher is preferred) in order to guarantee a good fixation of the carrier element (6) within the sensor vessel (1). In case of an "undercut" the angle is between 1° to 10°, preferably between 3° to 7°, preferably about 5°, in order to achieve a good fixation of the carrier element (6) within the sensor vessel, since the polymer of the carrier element (6) is not solid, but gel-like.

In one embodiment a thin glass, e.g. quartz glass, may be fitted to the side of carrier element (6) facing the light conduction element (11) in order to prevent the damaging and/or drying out of the carrier element. In such a case the ferrule (8) may be dispensable since the sensor vessel (1) could be mounted directly on the analyzing device (19).

**Example 1: Design of the container of the sensor vessel**

The material of the sensor vessel (1) must be chemically inactive and optically inactive in order to avoid any "light contamination". Preferably the material fulfils medical standards, in a preferred embodiment the sensor vessel (1) fulfils the standards according to DIN 13279:2021 with respect to stability, leakage, etc.

In some embodiments a polymer, for example polyethylene (PE) or polypropylene (PP) may be used, further examples of appropriate polymers are in the application.

The diameter and the height of the reaction chamber (4) within the sensor vessel (1) must be such that the volume of the buffer-solution (5) in the reaction chamber (4) is about 300 μL and covers a swab stick in order to enable the transfer of collected biological material.

Furthermore the ferrule (8) must fit so tight in the sensor vessel (1) that any light-contamination (as well as leakage, etc.) is avoided.

The carrier-element (6) must be fixed in the sensor vessel (1) such that it does not move when the sensor vessel (1) falls from 1 meters height on a solid surface (falling test wherein the sensor vessel withstands a peak g-force of about 10.000g) and, furthermore, at the same time the carrier-element must stay in contact with the light conducting element (11) and needs to be contacted with the buffer-solution (5) when mounted on the analyzing device.

The carrier-element is made of a polymeric gel (for example polyacrylamide or agarose-gel) which can be cast, dispensed or inkjet printed.

**Example 2: Alternative preparations of the light conductor and the ferrule**

The light-conducting element (11) and the ferrule (8) can be designed in different modalities:

a. a "one-shot"-solution, wherein the light-conducting element (11) or the core (15) (with or without different sheaths (16) - (18)) is directly overmolded with the polymer of the sensor-vessel (1); wherein

i. the core (15) may be a glass optical fiber or a polymeric optical fiber; and/or

ii. instead of polishing the ends of the ferrule (8), it is cut within a thermal cutting process;

b. the light-conducting element (11) and/or the core (15) (with or without different sheaths (16) - (18)) is mounted without any glue in the ferrule (8);

c. the light-conducting element (11) and/or the core (15) (with or without different sheaths (16) - (18)) is clamped on both sides in a molding-tool and then overmolded / encapsulated. The molding process is preferably carried out with a thermoset molding compound ("Duroplast"). Alternatively, a different thermoplastic molding compound may be used.

d. the light-conducting element (11) and/or the core (15) (with or without different sheaths (16) - (18)) is coated directly with a cladding compound (glass or ceramic)

e. the light-conducting element (11) and/or the core (15) (with or without different sheaths (16) - (18)) is first polished on at least one end and then clamped on both sides in a molding-tool and then overmolded / encapsulated, wherein the light-conducting element (11) or the core (15) (with or without different sheaths (16) - (18)) protrudes beyond the sheath (10);

In one embodiment the light-conducting element (11) may comprise several cores (15) each cladded with a cladding (16), but coated with one coating/buffer (17) and jacket (18) (cf. figure 8).

It is of great importance for the signal-transduction within the device that the light-conducting element of the sensor vessel and the light-conducting element of the analyzing device are axial to each other with no or only little misalignment ("lateral skew"). In order to avoid any loss of signal, the lateral skew should be less than 100 μm, preferably less than 50 μm, even more preferably less than 10 μm or less.

Thus, in one embodiment in order to facilitate sufficient light conduction even in cases where the axial alignment is skewed, this can be compensated by using a multicore light-conducting element (cf. figure 8) with a diameter of between 100 micron to 500 micron, in one embodiment about 200 - 300 μm, preferably about 280 μm.

In yet another application parallel measurements of different biomarkers in one test-run may be possible by using multicore light-conducting element. In such a case for example different carrier elements or different parts of the same carrier element are excited at the same or different wavelengths, resulting in several measurements with just one sensor vessel.

In one embodiment the central element of such a multicore light-conducting element comprises several glass-fibers in a bundle, wherein either each of the fibers comprises a cladding and/or the bundle of several fibers comprises a common cladding, surrounded by a "wreath" of additional glass fibers which are cladded each (cf. figure 8 b). In another embodiment the inner core of the multicore light-conducting element comprises just one glass fiber with a larger diameter (e.g. 8 μm or more, 9 μm or more, 10 μm or more, 12 μm or more, 15 μm or more, 20 μm or more, and up to 50 μm, 100 μm or even 200 mic μm ron) which is cladded and is surrounded by a "wreath" of additional glass fibers which are also cladded each (cf. figure 8 c); in yet another embodiment the glass fibers are tightly packed in a bundle of total 100 - 500 μm, preferably 250 - 350 μm diameter (cf. figure 8 d). Of course also any variation and/or hybrid-solutions are possible as well, depending on the necessities of the particular application.

## Example 3: Fitting of the ferrule in the container

The ferrule (8) may be fitted into inner sleeve (7) of the sensor vessel (1) either by pressing and/or glued.

In one embodiment a multi- pronged fixation process was employed (compare also figure 3), comprising the steps:

- plasma activating the surface of the inner sleeve (7);

- applying epoxy-glue on the surface of the inner sleeve (7) and/or the ferrule (8);

- having at least a first (13), and preferably a second angle, guiding the ferrule in the inner sleeve (7);

- having a diameter in the last part of the inner sleeve (7) which is more narrow than the diameter of the ferrule (8), thus, providing a "*swage fitting*" of the ferrule (8), which allows a high precision (error margin of at least less than 1%, preferably less than 0.5%, more preferably less than 0.25%, most preferably of less than 0.1%) of axial, horizontal and vertical orientation of the ferrule (8) within inner sleeve (7) of the sensor vessel (1) and with respect to the carrier element (6).

## Example 4: Alternative lids

In some embodiments the lid (2) is screwed on the sensor vessel (1). However, in other embodiments the lid is made without screw cap, but by an induced fit, cap lock, safe lock or snap-cap mechanism, lip sealed cap (i.e. no sealing o-ring).

## Example 5: Alternative mating sleeves

The mating sleeves are used to commutate two optical fibers, these components are finished with high level of tolerance and precision. Also mating sleeves are used to commutate optical fibers with different finishing (connectors), where the main difference between connectors is the outside diameter (OD) of the connector ferrule. Ferrules can be fitted with a mating sleeve commutating ø3.2 mm (typically SMA) with ø2.5 mm (FC/PC/SC) or ø1.25 mm (FC/PC/SC) or between the ferrules with similar OD.

The mating sleeves must ensure efficient transmission of optical signal in both direction to the carrier-element and from the carrier-element. Therefore the alignment between optical fibers within the ferrules as in the plane of contact, as in the direction normal to the contact plain, plays an important role. In plane displacement must be less than d/15 (where d is the fiber core diameter), preferably better as d/25, preferably better as d/50 or preferably d/100

The method and consequently the devices using two different wavelengths one for the excitation and second for the detection, the fiber must be a multimode with the core diameter of 100 $\mu$m, 125 $\mu$m, 150 $\mu$m, 200 $\mu$m, 250 $\mu$m, or 300 $\mu$m.

## Example 6: Alternative preparations of the ferrule

In one embodiment ceramic ferrules prepared by sintering of zirconia oxide powder. Next step is gluing of the optical fiber (core and clad) with a glue, within the ferrule, such as epoxy or similar, the glue must be cured. The requirement here that the bore size (ID) should be slightly larger 5-10 $\mu$m as the diameter of the fiber core with clad. Afterwards, the optical fiber must be cut and the ferrule must be polished from both sides. Ferrules prepared in the way have very good mechanical stability and rigidness. Optical connectors can be changed (connected and disconnected) up to 500 times without aging of the ferrule.

Alternatively the ferrule can be equipped with the optical fiber during the ferrule molding step. For example the fiber (core with cladding) is strained in the molding form. The form is filled with a thermoset material ("duroplast") or with e.g. low melting temperature glass (pressure <670Mpa and T<220°C). The stab is finished in the way may have length equal to twice lengths of the ferrule desired. Later the stab is cut/sawed in the middle that minimum 2 ferrules are obtained. Finally the excessing fiber to be cut and the ferrules polished both sides. Ferrules made in the way should be sufficient for a single usage (disposable).

In some embodiments the only fiber core to be strained in the molding form, and the form to be filled with a cladding material, so that the desired NA will be obtained (refractive index of the core $n_{core}$ and refractive index of the cladding $n_{clad}$)

$$NA = n sin Q = \sqrt{n_{core}^2 - n_{clad}^2},$$

Where n is refractive index of the air ~1.0 and Q is the so called acceptance angle.

## Example 7: Measurement with the inventive sensor element

50$\mu$l saliva-samples of 20 subjects of which 50% were infected with Sars-CoV-2 are subjected to 10 sensor elements according to the invention, comprising 200 $\mu$l buffer solution. The carrier-element comprised a nucleic acid sensor-probe selective for Sars-CoV-2 (Alpha) and coupled with a fluorochrome. After 5 minutes of incubation the reaction within the sensor element is measured with an analyzing device, such as described in detail in DE 10 2019 132 525.0. All subjects infected with Sars-CoV-2 could be positively identified. The sensitivity and sensibility are better (10 out of 10 positive) as compared to a lateral-flow test (Roche) (8 out of 10 positive) and comparable in quality to a PCR-SARS-CoV-2 test (10 out of 10 positive), thereby increasing the accuracy of the test as compares to the lateral flow test and accelerating the test-time as compared to the PCR.

23 smears of different hospital surface were subjected to 23 sensor elements according to the invention, comprising 150 µl buffer solution. The carrier-element comprised a antibody sensor-probe selective for MRSA and coupled with a fluorochrome. After 5 minutes of incubation the reaction within the sensor element is measured with an analyzing device, such as described in detail in DE 10 2019 132 525.0. In 2 out of 23 smears MRSA could be detected which is verified by a MRSA-test (3M™-BacLite™-Rapid-MRSA-Test).

1000 blood-samples of a blood donation service are tested by subjecting 150µl-samples to 1000 sensor elements according to the invention, comprising 500 µl buffer solution. The carrier-element comprised a nucleic acid sensor-probe selective for Hepatitis-C and coupled with a fluorochrome. After 7 minutes of incubation the reaction within the sensor element is measured with an analyzing device, such as described in detail in DE 10 2019 132 525.0. The sensitivity and sensibility is comparable (19 out of 20 positive) in quality to a PCR-HEP-C test (20 out of 20 positive), thereby increasing the accuracy of the test as compares to the lateral flow test and accelerating the test-time as compared to the PCR.

52 blood-samples of a subjects are tested for troponin by subjecting 100µl-samples to 52 sensor elements according to the invention, comprising 300 µl buffer solution. The carrier-element comprised an antibody sensor-probe selective for troponin and coupled with a fluorochrome. After 5 minutes of incubation the reaction within the sensor element is measured with an analyzing device, such as described in detail in DE 10 2019 132 525.0. The sensitivity and sensibility is significant better (11 out of 12 positive) as compared to the lateral-flow-test (3 out of 12 positive) and comparable with the tests in the laboratory (12 out of 12 positive) thereby increasing the accuracy of the test as compares to the lateral flow test and accelerating the test-time as compared to the PCR.

**The reference numbers in the figures are:**

1 sensor vessel
2 lid of the sensor vessel
3 sealing (for example an O-ring, sealing ring and/or lip sealing)
4 reaction chamber
5 buffer solution
6 carrier element (comprising the sensor probe, for example with a fluorochrome, i.e. a fluorescence tag)
7 inner sleeve
8 ferrule
9 outer sleeve
10 sheath
11 light conducting element
12 optically clear adhesive (optional)
13 guiding angle(s)
14 adhesive depot(s)
15 core
16 cladding
17 coating and/or buffer
18 jacket
19 optical interface of analyzing device

**Claims**

1. A sensor vessel (1), **characterized in** comprising at least a reaction chamber (4), a ferrule (8) comprising a light conducting element (11) and a sheath (10) encapsulating the light conducting element (11), and a carrier-element (6) comprising a sensor-probe.

2. The sensor vessel (1) according to claim 1, further comprising an element selected from a lid (2), a sealing (3), a buffer-solution (5), an inner sleeve (7) configured to be fitted with the ferrule (8), an outer sleeve (9) configured to be fitted to an optical analyzing device and/or a combination thereof.

3. The sensor vessel (1) according to any one of the previous claims, made of a polymer selected from PE, PP, PVC, CA, PEF, COC, or, preferably, a compostable polymer, such as PBS, PLA, PHA, TPS, PCL, PBAT or any other biodegradable polymer according to EN 13432.

4. The sensor vessel (1) according to any one of the previous claims, wherein the light conducting element (11) is arranged in the center of the transparent carrier-element (6) with an error deviation from the center of the longitudinal axis of less than 5%, preferably less than 1%; and/or with an error deviation perpendicular to the surface of the transparent carrier-element (6) of less than 3°, preferably less than 1°.

5. The sensor vessel (1) according to any one of claims 2 to 4, wherein the buffer-solution (5) is configured to provide both the lysis of a sample as well as the hybridization and/or binding of the sensor-probe within the carrier element (6) to a target molecule, wherein the buffer-solution is optically inactive in a wavelength between 500 nm and 700 nm.

**6.** The sensor vessel (1) according to one of the previous claims, wherein the carrier-element (6) is 99% transparent to light of a wavelength between 500 nm and 700 nm and is made from a composition comprising at least one member selected from the group consisting of agarose, acrylamide, bisacrylamide, ethylene glycol and/or a combination thereof.

**7.** The sensor vessel (1) according to one of the previous claims, wherein the light conducting element (11) is selected from an optical glass fiber, a polymeric optical fiber, a plastic optical fiber and/or a combination thereof.

**8.** The sensor vessel (1) according to one of the previous claims, wherein the sheath (10) is configured to possess a lower refractive index as compared to the refractive index of at least one core (15) of the light conducting element (11), resulting in a total reflection within the at least one core (15) of the light conducting element (11).

**9.** The sensor vessel (1) according to any one of the previous claims, wherein the light conducting element (11) is glued to the sheath (10) with an adhesive (12) which is optically inactive in a wavelength of between 300 nm - 1100 nm, preferably of between 500 nm - 700 nm, selected from the group comprising of high temperature epoxy or UV curable epoxies or resins.

**10.** The sensor vessel (1) according to claims 2 to 9, wherein the outer sleeve (9) is fitted with a mount onto the optical analyzing device, which is selected from the group comprising of a screw top mount, snap mount, bayonet mount and/or a spring loaded mount and wherein the mount of the outer sleeve (9) is configured to provide a contact pressure of at least 1 N at the interface between the light conducting element and the optical analyzing device.

**11.** The sensor vessel (1) according to one of the previous claims, wherein the ferrule (8) is composed in at least one of the following forms:

a. the light-conducting element (11) and/or the core (15), optionally comprising at least one of sheaths (16) - (18), is directly overmolded with a polymer; wherein

i. the core (15) may be a glass optical fiber or a polymeric optical fiber; and/or
ii. the ends of the ferrule (8), are polished and/or cut;

b. the light-conducting element (11) and/or the core (15), optionally comprising at least one of sheaths (16) - (18), is mounted without any glue in the sheath (10);
c. the light-conducting element (11) and/or the core (15), optionally comprising at least one of sheaths (16) - (18), is clamped on both sides in a molding-tool and then overmolded / encapsulated with a thermoplast;
d. the light-conducting element (11) and/or the core (15) is coated directly with a cladding compound (glass, polymer or ceramic) which at the same time forms the sheath (10) of the ferrule;
e. the light-conducting element (11) and/or the core (15), optionally comprising at least one of sheaths (16) - (18), is first polished on at least one end and then clamped on both sides in a molding-tool and then overmolded / encapsulated with a thermoplast, wherein the light-conducting element (11) and/or the core (15), optionally comprising at least one of sheaths (16) - (18), protrudes beyond the sheath (10).

**12.** The sensor vessel (1) according to one of the previous claims, wherein the light-conducting element (11) comprises several cores (15) (multicore light-conducting element).

**13.** Process for producing the sensor vessel (1) according to any of the previous claims, comprising at least the steps:

a. molding the reaction chamber (4) out of a suitably polymer,
b. producing a ferrule (8) with a light conducting element (11),
c. fitting the ferrule (8) with a light conducting element (11) to the reaction chamber (4),
d. fitting a carrier element into the reaction chamber (4),
e. filling the reaction chamber (4) with buffer solution (5);
f. and fitting a cover to the reaction chamber (4),

thereby receiving the sensor vessel (1).

**14.** Use of the sensor vessel (1) according to any of the claims 1 - 12, for the detection of a biomarker in a biological sample.

**15.** Use of the sensor vessel (1) according to claim 14, wherein the detected biomarker is selected from a nucleic acid, peptide, protein, carbohydrate or lipid associated with a medical condition and/or disease.

Figure 1

Figure 2

Figure 3

Figure 4

15    16    17    18

Figure 5

Figure 6

**Figure 7**

Figure 8

Figure 9

A

B

C

Europäisches
Patentamt

European
Patent Office

Office européen
des brevets

**EUROPEAN SEARCH REPORT**

Application Number

EP 21 21 0842

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/178391 A1 (LIEBSCH GREGOR [DE] ET AL) 17 June 2021 (2021-06-17) | 1-4,7,8, 10,12, 14,15 | INV. G01N21/03 G01N21/64 |
| Y | * paragraphs [0003], [0008], [0016], [0043] * <br> * figure 9 * | 3,5,6,9, 11 | G01N21/77 |
| X | US 2021/324455 A1 (FEDORYCH OLEH [DE]) 21 October 2021 (2021-10-21) | 1,2,4-8, 10-15 | |
| Y | * paragraphs [0010], [0023], [0033], [0038], [0039], [0051] – [0053], [0057], [0059] * <br> * figure 1 * | 3,5,6,9, 11 | |
| Y | US 4 378 954 A (BAKER JAMES C [GB]) 5 April 1983 (1983-04-05) * column 1, line 52 – line 55 * | 9 | |
| Y | US 2017/269306 A1 (TONG ZHAOYANG [CN] ET AL) 21 September 2017 (2017-09-21) * paragraphs [0192] – [0194] * | 11 | |
| A | JP 2007 155585 A (CANON KK) 21 June 2007 (2007-06-21) * claim 5 * | 13 | TECHNICAL FIELDS SEARCHED (IPC) <br><br> G01N |

The present search report has been drawn up for all claims

| Place of search | Date of completion of the search | Examiner |
|---|---|---|
| Munich | 12 April 2022 | Witte, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 21 21 0842

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2022

| Patent document cited in search report | | Publication date | Patent family member(s) | | Publication date |
|---|---|---|---|---|---|
| US 2021178391 | A1 | 17-06-2021 | EP | 3821230 A1 | 19-05-2021 |
| | | | US | 2021178391 A1 | 17-06-2021 |
| | | | WO | 2020012263 A1 | 16-01-2020 |
| US 2021324455 | A1 | 21-10-2021 | EP | 3896430 A1 | 20-10-2021 |
| | | | US | 2021324455 A1 | 21-10-2021 |
| | | | WO | 2021209565 A2 | 21-10-2021 |
| US 4378954 | A | 05-04-1983 | CA | 1150543 A | 26-07-1983 |
| | | | DE | 3000571 A1 | 31-07-1980 |
| | | | FR | 2447043 A1 | 14-08-1980 |
| | | | GB | 2039379 A | 06-08-1980 |
| | | | US | 4378954 A | 05-04-1983 |
| US 2017269306 | A1 | 21-09-2017 | CN | 105445865 A | 30-03-2016 |
| | | | US | 2017269306 A1 | 21-09-2017 |
| | | | WO | 2016027214 A1 | 25-02-2016 |
| JP 2007155585 | A | 21-06-2007 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102019132525

**Non-patent literature cited in the description**

- **W. E. MOERNERA ; DAVID P. FROMM.** Methods of single-molecule fluorescence spectroscopy and microscopy. *Review of Scientific Instruments,* August 2003, vol. 74 (8, https://my.ece.utah.edu/~blair/T/ece7960/papers/moerner03msmf.pdf
- **SANTALUCIA J JR.** *Proc. Natl. Acad. Sci. USA,* 1998, vol. 95
- **TYAGI S ; KRAMER FR.** Molecular beacons: probes that fluoresce upon hybridization. *Nat. Biotechnol.,* 1996, vol. 14 (3), 303-308
- **EUROFINS GENOMICS.** Ebersberg, Germany. Integrated DNA Technologies, Inc,
- *J Clin Microbiol,* 30 December 2015, vol. 54 (1), 180-184